# EUROPEAN PATENT APPLICATION

(11) **EP 4 376 472 A1**
(43) Date of publication of application: **29.05.2024**
(21) Application number: 22855268.3
(22) Date of filing: 30.07.2022
(51) Int. Cl.: H04W 24/02, H04W 72/04

(54) **COMMUNICATION METHOD AND APPARATUS**

(30) Priority: 13.08.2021 CN 202110931542
(71) Applicant: Huawei Technologies Co., Ltd., Shenzhen, Guangdong 518129 (CN)
(72) Inventor: ZHANG, Yangyang, Shenzhen, Guangdong 518129 (CN); FENG, Shulan, Shenzhen, Guangdong 518129 (CN); YU, Zheng, Shenzhen, Guangdong 518129 (CN)
(74) Representative: MERH-IP Matias Erny Reichl Hoffmann Patentanwälte PartG mbB
(86) International application number: PCT/CN2022/109308
(87) International publication number: WO 2023/016285

(57) **Abstract**

Embodiments of this application provide a communication method and apparatus. The communication method includes: A network device determines N opportunities, where the N opportunities are within a first time range, and N is a positive integer greater than or equal to 2; and the first time range includes M opportunity windows, an i^{th} opportunity window in the M opportunity windows includes Ni opportunities in the N opportunities, Ni is a positive integer, M is a positive integer, and i=1, 2, ..., M. The network device performs data transmission within two or more of the N opportunities. It can be learned that the network device performs data transmission within the plurality of opportunities within the first time range. This helps perform transmission of a large data packet in a centralized manner within the first time range, and reduces a data transmission delay. In addition, when the data arrives earlier or later than expected, the network device can perform data transmission within an opportunity in the front or the back of the plurality of opportunities in time domain, thereby resolving a data transmission delay problem caused by jitter of an XR service.

## Description

This application claims priority to Chinese Patent Application No. 202110931542.0, filed with the China National Intellectual Property Administration on August 13, 2021 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Extended reality (extended reality, XR) refers to all real and virtual combined environments and related human-machine interaction generated by computer technologies and wearable devices. An XR service includes an XR video service, and a video frame of the XR video service has a large data packet. Transmission of the video frame of the XR video service is performed between a network device and a terminal device to provide a service corresponding to the XR video service for a user.

For example, downlink data transmission is performed between the network device and the terminal device. A media server sends the video frame to the network device, and the network device sends the received video frame to the terminal device. In this case, the terminal device may provide, based on the received video frame, the service corresponding to the XR video service for the user. In addition, in an ideal case, the media server periodically sends the video frame of the XR video service to the network device, and the video frame of the XR video service periodically arrives at the network device, that is, the video frame may arrive at the network device at an expected moment. However, due to factors such as rendering, source coding, and routing path selection, a moment at which the video frame actually arrives at the network device may have jitter compared with the expected moment. In other words, the moment at which the video frame actually arrives at the network device may be exactly the expected moment, may be earlier than the expected moment, or may be later than the expected moment.

In opportunities periodically configured by the network device for the terminal device by using a semi-persistent scheduling mechanism, transmission of a large data packet and a data packet with jitter may not be performed at an opportunity in current periodicity, and need to be performed at an opportunity in next periodicity, resulting in a large data transmission delay between the network device and the terminal device. Therefore, how to reduce the data transmission delay between the network device and the terminal device is an urgent problem to be resolved.

### SUMMARY

Embodiments of this application provide a communication method and apparatus, to help reduce a data transmission delay between a network device and a terminal device.

According to a first aspect, this application provides a communication method, performed by a terminal device or a module in a terminal device. The method includes: The terminal device determines N opportunities, where the N opportunities are within a first time range, and N is a positive integer greater than or equal to 2; and the first time range includes M opportunity windows, an i^{th} opportunity window in the M opportunity windows includes N, opportunities in the N opportunities, N, is a positive integer, M is a positive integer, and i=1, 2, ..., M. The terminal device may perform data transmission within two or more of the N opportunities.

That the terminal device may perform data transmission within two or more of the N opportunities includes: In downlink transmission, the terminal device may receive data within the two or more of the N opportunities; and in uplink transmission, the terminal device may send data within the two or more of the N opportunities.

It can be learned that, compared with a manner in which data transmission is performed only within one opportunity, the communication method in which the terminal device performs data transmission within the plurality of opportunities within the first time range helps perform transmission of a large data packet in a centralized manner within the first time range, and reduces a data transmission delay.

In addition, when the data arrives earlier than an expected moment, the terminal device can perform data transmission within an opportunity in the front of the plurality of opportunities in time domain; or when the data arrives later than an expected moment, the terminal device can perform data transmission within an opportunity in the back of the plurality of opportunities in time domain. This resolves, on the basis of a feature of periodic arrival of an XR service, a data transmission delay problem caused by jitter within a specific range.

In an optional implementation, the method further includes: The terminal device receives first information, where the first information indicates a length of the first time range. This implementation helps the terminal device learn of the length of the first time range, so that data transmission can be performed within the first time range.

In an optional implementation, M<N, the M opportunity windows include X opportunity windows, each of the X opportunity windows includes the two or more of the N opportunities, and X is a positive integer less than or equal to M. It can be learned that, in this implementation, the M opportunity windows include an opportunity window including a plurality of opportunities.

In an optional implementation, when X is equal to 1, an interval between any two adjacent opportunities in the X opportunity windows is T₁ time units, and T₁ is 0 or a positive number; or when X is greater than or equal to 2, an interval between any two adj acent opportunities in each of the X opportunity windows is T₂ time units, and T₂ is 0 or a positive number. When T₁ or T₂ is 0, in this implementation, the network device can perform transmission of the large data packet in the centralized manner in time, thereby further reducing the data transmission delay. Alternatively, when T₁ or T₂ is the positive number, this implementation can better resolve the data transmission delay problem caused by jitter in the data packet, so that transmission of the data in the data packet can be completed within a data packet delay budget (Packet Delay Budget, PDB) threshold. This avoids resource waste and energy consumption caused by retransmission of the data packet when transmission of data in the data packet is performed beyond the PDB threshold, and improves energy efficiency of data transmission.

In an optional implementation, when M is greater than or equal to 2, an interval between any two adjacent opportunity windows in the M opportunity windows is T₃ time units, and T₃ is 0 or a positive number. When T₃ is 0, in this implementation, the network device can perform transmission of the large data packet in the centralized manner in time, thereby further reducing the data transmission delay. Alternatively, when T₃ is the positive number, this implementation can better resolve the data transmission delay problem caused by jitter in the data packet, so that transmission of the data in the data packet can be completed within a PDB threshold. This avoids resource waste and energy consumption caused by retransmission of the data packet when transmission of data in the data packet is performed beyond the PDB threshold, and improves energy efficiency of data transmission.

In an optional implementation, the method further includes: The terminal device receives second information, where the second information indicates the N opportunities; and the determining N opportunities includes: determining the N opportunities based on the second information. In this implementation, the terminal device can determine the N opportunities included in the first time range, so that the data transmission can be performed within the N opportunities.

In an optional implementation, the two or more of the N opportunities for data transmission are opportunities in one or more of the M opportunity windows.

In an optional implementation, the method further includes: performing retransmitted data transmission within opportunities in the one or more of the M opportunity windows, where an interval between an end location of a last time unit of an opportunity for data transmission and a start location of a first time unit of an opportunity for retransmitted data transmission is T₄ time units, and T₄ is a positive number. The opportunity for data transmission is before the opportunity for retransmitted data transmission, and the retransmitted data is retransmitted data corresponding to the data. In this implementation, when an error occurs in data transmission, the network device can perform retransmitted data transmission within the opportunity included in the first time range, thereby helping improve resource utilization.

Optionally, after retransmitted data transmission is performed within the opportunity in the one or more of the M opportunity windows, an opportunity after the opportunity for retransmitted data transmission in the first time range is deactivated. This implementation helps reduce resource waste of the opportunity after the opportunity for retransmitted data transmission within the first time range. In addition, this implementation further helps reduce energy waste caused because the terminal device needs to continue to wait for data transmission within the first time range after retransmitted data transmission is performed within the first time range, and reduces power consumption of the terminal device.

According to a second aspect, this application provides a communication method, performed by a network device or a module in a network device. The method includes: The network device determines N opportunities, where the N opportunities are within a first time range, and N is a positive integer greater than or equal to 2; and the first time range includes M opportunity windows, an i^{th} opportunity window in the M opportunity windows includes N, opportunities in the N opportunities, N, is a positive integer, M is a positive integer, and i=1, 2, ..., M. The network device may perform data transmission within two or more of the N opportunities.

That the network device may perform data transmission within two or more of the N opportunities includes: In downlink transmission, the network device may send data within the two or more of the N opportunities; and in uplink transmission, the network device may receive data within the two or more of the N opportunities.

It can be learned that, compared with a manner in which data transmission is performed only within one opportunity, the communication method in which the network device performs data transmission within the plurality of opportunities within the first time range helps perform transmission of a large data packet in a centralized manner within the first time range, and reduces a data transmission delay.

In addition, when the data arrives earlier than an expected moment, the network device can perform data transmission within an opportunity in the front of the plurality of opportunities in time domain; or when the data arrives later than an expected moment, the network device can perform data transmission within an opportunity in the back of the plurality of opportunities in time domain. This resolves, on the basis of a feature of periodic arrival of an XR service, a data transmission delay problem caused by jitter within a specific range.

In an optional implementation, the method further includes: sending first information, where the first information indicates a length of the first time range. This implementation helps the terminal device learn of the length of the first time range, so that data transmission can be performed within the first time range.

In an optional implementation, M<N, the M opportunity windows include X opportunity windows, each of the X opportunity windows includes two or more of the N opportunities, and X is a positive integer less than or equal to M. It can be learned that, in this implementation, the M opportunity windows include an opportunity window including two or more opportunities.

In an optional implementation, when X is equal to 1, an interval between any two adjacent opportunities in the X opportunity windows is T₁ time units, and T₁ is 0 or a positive number; or when X is greater than or equal to 2, an interval between any two adj acent opportunities in each of the X opportunity windows is T₂ time units, and T₂ is 0 or a positive number. When T₁ or T₂ is 0, in this implementation, the network device can perform transmission of the large data packet in the centralized manner in time, thereby further reducing the data transmission delay. Alternatively, when T₁ or T₂ is the positive number, this implementation can better resolve the data transmission delay problem caused by jitter in the data packet, so that transmission of the data in the data packet can be completed within a PDB threshold. This avoids resource waste and energy consumption caused by retransmission of the data packet when transmission of data in the data packet is performed beyond the PDB threshold, and improves energy efficiency of data transmission.

In an optional implementation, when M is greater than or equal to 2, an interval between any two adjacent opportunity windows in the M opportunity windows is T₃ time units, and T₃ is 0 or a positive number. When T₃ is 0, in this implementation, the network device can perform transmission of the large data packet in the centralized manner in time, thereby further reducing the data transmission delay. Alternatively, when T₃ is the positive number, this implementation can be flexibly applied to better resolving the data transmission delay problem caused by jitter in the data packet, so that transmission of the data in the data packet can be completed within the PDB threshold. This avoids resource waste and energy consumption caused by retransmission of the data packet when transmission of data in the data packet is performed beyond the PDB threshold, and improves energy efficiency of data transmission.

In an optional implementation, the method further includes: sending second information, where the second information indicates the N opportunities. This implementation helps the terminal device learn of the N opportunities included in the first time range, so that data transmission can be performed within the N opportunities.

In an optional implementation, the two or more of the N opportunities for data transmission are opportunities in one or more of the M opportunity windows.

In an optional implementation, the method further includes: performing retransmitted data transmission within opportunities in the one or more of the M opportunity windows, where an interval between an end location of a last time unit of an opportunity for data transmission and a start location of a first time unit of an opportunity for retransmitted data transmission is T₄ time units, and T₄ is a positive number. The opportunity for data transmission is before the opportunity for retransmitted data transmission, and the retransmitted data is retransmitted data corresponding to the data. In this implementation, when an error occurs in data transmission, the network device can perform retransmitted data transmission within the opportunity included in the first time range, thereby helping improve resource utilization.

Optionally, after retransmitted data transmission is performed within the opportunity in the one or more of the M opportunity windows, an opportunity after the opportunity for retransmitted data transmission in the first time range is deactivated. This implementation helps reduce resource waste of the opportunity after the opportunity for retransmitted data transmission within the first time range. In addition, this implementation further helps reduce energy waste caused because the network device needs to continue to wait for data transmission within the first time range after retransmitted data transmission is performed within the first time range, and reduces power consumption of the network device.

According to a third aspect, this application provides a communication method, performed by a terminal device or a module in a terminal device. The method includes: receiving third information, where the third information indicates a length of each of a plurality of time ranges, and at least two of the plurality of time ranges have different lengths; and performing data transmission within the plurality of time ranges.

That the terminal device performs data transmission within the plurality of time ranges includes: In downlink transmission, the terminal device receives data within the plurality of time ranges; and in uplink transmission, the terminal device sends data within the plurality of time ranges.

It can be learned that the communication method helps enable the plurality of time ranges to match periodicity in which the data in an XR service is in a decimal form, so that transmission of data in each periodicity can be performed in a time range that matches the periodicity. This reduces a data transmission delay caused by mismatch between periodicity of a resource and the periodicity of the data in the XR service, that is, reduces a communication delay. It can be learned that the communication method helps transmission of the data in a data packet performed within a PDB threshold, avoids a case in which the data packet needs to be discarded when transmission of data in the data packet is performed beyond the PDB threshold, that is, further reduces a communication packet loss rate, increases a probability of data transmission in the plurality of time ranges, and reduces power consumption of the terminal.

In an optional implementation, a correspondence exists between the length of each time range and the data. Optionally, a correspondence may exist between the length of each time range and the periodicity of the data.

In an optional implementation, a length of an n^{th} time range in the plurality of time ranges satisfies the following formula:

The length of the n^{th} time range= *fun*(*T* × *n*) - *fun*[*T* × (*n* - 1)], where T is periodicity of the data, *fun* represents a rounding function, and n is a positive integer. Optionally, the third information is determined by a network device based on the foregoing formula, a channel state, signal quality, and the like. In this implementation, the determined length of each time range is more applicable to an actual communication environment. Optionally, the third information is determined by a network device based on fourth information, a channel state, signal quality, and the like. The fourth information indicates a length of each time range preset by the terminal device. The length of each time range preset by the terminal device is determined by the terminal device based on the foregoing formula, a channel status, and signal quality. In this implementation, the length of each time range determined by the network device is more applicable to the actual communication environment and is applicable to data transmission between the network device and the specific terminal device, thereby further reducing the data transmission delay and reducing power consumption of the terminal device.

In an optional implementation, the length of each of the plurality of time ranges includes at least a length of first periodicity and an offset corresponding to each of the plurality of time ranges. In this implementation, the terminal device can determine the length of each of the plurality of time ranges based on the length of the first periodicity and the offset corresponding to each of the plurality of time ranges, thereby reducing a calculation amount of the terminal device and reducing power consumption of the terminal device. Optionally, the offset corresponding to each time range may be a length offset or a location offset.

According to a fourth aspect, this application provides a communication method, performed by a network device or a module in a network device. The method includes: sending third information, where the third information indicates a length of each of a plurality of time ranges, and at least two of the plurality of time ranges have different lengths; and performing data transmission within the plurality of time ranges.

That the network device performs data transmission within the plurality of time ranges includes: In downlink transmission, the network device sends data within the plurality of time ranges; and in uplink transmission, the network device receives data within the plurality of time ranges.

It can be learned that the communication method helps enable the plurality of time ranges to match periodicity in which the data in an XR service is in a decimal form, so that transmission of data in each periodicity can be performed on a resource in a time range that matches the periodicity. This reduces a data transmission delay caused by mismatch between periodicity of a resource and the periodicity of the data in the XR service, that is, reduces a communication delay. It can be learned that the communication method helps transmission of the data in a data packet performed within a PDB threshold, avoids a case in which the data packet needs to be discarded when transmission of data in the data packet is performed beyond the PDB threshold, that is, further reduces a communication packet loss rate, increases a probability of data transmission in the plurality of time ranges, and reduces power consumption of the terminal.

In an optional implementation, a correspondence exists between the length of each time range and the data. Optionally, a correspondence may exist between the length of each time range and the periodicity of the data.

In an optional implementation, a length of an n^{th} time range in the plurality of time ranges satisfies the following formula:

The length of the n^{th} time range= *fun*(*T* × n) - *fun*[*T* × (*n* - 1)], where T is periodicity of the data, *fun* represents a rounding function, and n is a positive integer.

Optionally, the third information is determined by the network device based on the foregoing formula, a channel state, signal quality, and the like. In this implementation, the determined length of each time range is more applicable to an actual communication environment. Optionally, the third information is determined by the network device based on fourth information, a channel state, signal quality, and the like. The fourth information indicates a length of each time range preset by a terminal device. The length of each time range preset by the terminal device is determined by the terminal device based on the foregoing formula, a channel status, and signal quality. In this implementation, the length of each time range determined by the network device is more applicable to the actual communication environment and is applicable to data transmission between the network device and the specific terminal device, thereby further reducing the data transmission delay and reducing power consumption of the terminal device.

In an optional implementation, the length of each of the plurality of time ranges includes at least a length of first periodicity and an offset corresponding to each of the plurality of time ranges. In this implementation, the terminal device can determine the length of each of the plurality of time ranges based on the length of first periodicity and the offset corresponding to each of the plurality of time ranges, thereby reducing a calculation amount of the terminal device and reducing power consumption of the terminal device. Optionally, the offset corresponding to each time range may be a length offset or a location offset.

According to a fifth aspect, a communication apparatus is provided. For beneficial effect, refer to the descriptions in the first aspect. Details are not described herein again. The communication apparatus has a function of implementing the behavior in the method instance in the first aspect. The function may be implemented by hardware, or may be implemented by hardware executing corresponding software. The hardware or the software includes one or more modules corresponding to the foregoing function.

In a possible design, the communication apparatus includes: a processing module, configured to determine N opportunities, where the N opportunities are within a first time range, and N is a positive integer greater than or equal to 2; and the first time range includes M opportunity windows, an i^{th} opportunity window in the M opportunity windows includes *Nᵢ* opportunities in the N opportunities, *Nᵢ* is a positive integer, M is a positive integer, and i=1, 2, ..., M; and a communication module, configured to perform data transmission within two or more of the N opportunities.

These modules may perform corresponding functions in the method example in the first aspect. For details, refer to the detailed descriptions in the method example. Details are not described herein again.

According to a sixth aspect, a communication apparatus is provided. For beneficial effect, refer to the descriptions in the second aspect. Details are not described herein again. The communication apparatus has a function of implementing the behavior in the method instance in the second aspect. The function may be implemented by hardware, or may be implemented by hardware executing corresponding software. The hardware or the software includes one or more modules corresponding to the foregoing function.

In a possible design, the communication apparatus includes: a processing module, configured to determine N opportunities, where the N opportunities are within a first time range, and N is a positive integer greater than or equal to 2; and the first time range includes M opportunity windows, an i^{th} opportunity window in the M opportunity windows includes *Nᵢ* opportunities in the N opportunities, *Nᵢ* is a positive integer, M is a positive integer, and i=1, 2, ..., M; and a communication module, configured to perform data transmission within two or more of the N opportunities.

These modules may perform corresponding functions in the method example in the second aspect. For details, refer to the detailed descriptions in the method example. Details are not described herein again.

According to a seventh aspect, a communication apparatus is provided. For beneficial effect, refer to the descriptions in the third aspect. Details are not described herein again. The communication apparatus has a function of implementing the behavior in the method instance in the third aspect. The function may be implemented by hardware, or may be implemented by hardware executing corresponding software. The hardware or the software includes one or more modules corresponding to the foregoing function.

In a possible design, the communication apparatus includes: a transceiver module, configured to receive third information, where the third information indicates a length of each of a plurality of time ranges, and at least two of the plurality of time ranges have different lengths; and the transceiver module is further configured to perform data transmission within the plurality of time ranges. These modules may perform corresponding functions in the method example in the third aspect. For details, refer to the detailed descriptions in the method example. Details are not described herein again.

According to an eighth aspect, a communication apparatus is provided. For beneficial effect, refer to the descriptions in the fourth aspect. Details are not described herein again. The communication apparatus has a function of implementing the behavior in the method instance in the fourth aspect. The function may be implemented by hardware, or may be implemented by hardware executing corresponding software. The hardware or the software includes one or more modules corresponding to the foregoing function.

In a possible design, the communication apparatus includes: a transceiver module, configured to send third information, where the third information indicates a length of each of a plurality of time ranges, and at least two of the plurality of time ranges have different lengths; and the transceiver module is configured to perform data transmission within the plurality of time ranges. These modules may perform corresponding functions in the method example in the fourth aspect. For details, refer to the detailed descriptions in the method example. Details are not described herein again.

According to a ninth aspect, a communication apparatus is provided. The communication apparatus may be the terminal device in the foregoing method embodiments, or may be a chip disposed in a terminal device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the terminal device in the foregoing method embodiments.

According to a tenth aspect, a communication apparatus is provided. The communication apparatus may be the network device in the foregoing method embodiments, or may be a chip disposed in a network device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the network device in the foregoing method embodiments.

According to an eleventh aspect, a computer program product is provided. The computer program product includes computer program code. When the computer program code is run, the methods performed by the terminal device in the foregoing aspects are performed.

According to a twelfth aspect, a computer program product is provided. The computer program product includes computer program code. When the computer program code is run, the methods performed by the network device in the foregoing aspects are performed.

According to a thirteenth aspect, this application provides a chip system. The chip system includes a processor, configured to implement functions of the terminal device in the methods in the foregoing aspects. In a possible design, the chip system further includes a memory, configured to store program instructions and/or data. The chip system may include a chip, or may include a chip and another discrete component.

According to a fourteenth aspect, this application provides a chip system. The chip system includes a processor, configured to implement functions of the network device in the methods in the foregoing aspects. In a possible design, the chip system further includes a memory, configured to store program instructions and/or data. The chip system may include a chip, or may include a chip and another discrete component.

According to a fifteenth aspect, this application provides a computer-readable storage medium. The computer-readable storage medium stores a computer program. When the computer program is run, the methods performed by the terminal device in the foregoing aspects are implemented.

According to a sixteenth aspect, this application provides a computer-readable storage medium. The computer-readable storage medium stores a computer program. When the computer program is run, the methods performed by the network device in the foregoing aspects are implemented.

### BRIEF DESCRIPTION OF DRAWINGS

FIG. 1a is a schematic diagram of a structure of a communication system according to an embodiment of this application;
FIG. 1b is a schematic diagram of a structure of another communication system according to an embodiment of this application;
FIG. 1c is a schematic diagram of a structure of still another communication system according to an embodiment of this application;
FIG. 2 is a schematic diagram of an application field of an XR technology;
FIG. 3a is a schematic diagram of data distribution according to an embodiment of this application;
FIG. 3b is a schematic diagram of another data distribution according to an embodiment of this application;
FIG. 4a is a schematic diagram of data transmission according to an embodiment of this application;
FIG. 4b is a schematic diagram of another data transmission according to an embodiment of this application;
FIG. 5 is a schematic flowchart of a communication method 100 according to an embodiment of this application;
FIG. 6a is a schematic diagram of opportunity distribution according to an embodiment of this application;
FIG. 6b is a schematic diagram of another opportunity distribution according to an embodiment of this application;
FIG. 7a is a schematic diagram of still another opportunity distribution according to an embodiment of this application;
FIG. 7b is a schematic diagram of yet another opportunity distribution according to an embodiment of this application;
FIG. 8a is a schematic diagram of still yet another opportunity distribution according to an embodiment of this application;
FIG. 8b is a schematic diagram of further opportunity distribution according to an embodiment of this application;
FIG. 8c is a schematic diagram of still further opportunity distribution according to an embodiment of this application;
FIG. 8d is a schematic diagram of yet further opportunity distribution according to an embodiment of this application;
FIG. 9a is a schematic diagram of still another data transmission according to an embodiment of this application;
FIG. 9b is a schematic diagram of yet another data transmission according to an embodiment of this application;
FIG. 9c is a schematic diagram of still yet another data transmission according to an embodiment of this application;
FIG. 9d is a schematic diagram of further data transmission according to an embodiment of this application;
FIG. 10a is a schematic diagram of still yet further opportunity distribution according to an embodiment of this application;
FIG. 10b is a schematic diagram of even yet another opportunity distribution according to an embodiment of this application;
FIG. 10c is a schematic diagram of even yet another opportunity distribution according to an embodiment of this application;
FIG. 10d is a schematic diagram of even yet another opportunity distribution according to an embodiment of this application;
FIG. 11a is a schematic diagram of even yet another opportunity distribution according to an embodiment of this application;
FIG. 11b is a schematic diagram of even yet another opportunity distribution according to an embodiment of this application;
FIG. 12a is a schematic diagram of still further data transmission according to an embodiment of this application;
FIG. 12b is a schematic diagram of yet further data transmission according to an embodiment of this application;
FIG. 12c is a schematic diagram of still yet further data transmission according to an embodiment of this application;
FIG. 12d is a schematic diagram of even yet another data transmission according to an embodiment of this application;
FIG. 13a is a schematic diagram of even yet another data transmission according to an embodiment of this application;
FIG. 13b is a schematic diagram of even yet another data transmission according to an embodiment of this application;
FIG. 14 is a schematic flowchart of a communication method 200 according to an embodiment of this application;
FIG. 15a is a schematic diagram of HARQ feedback according to an embodiment of this application;
FIG. 15b is a schematic diagram of another HARQ feedback according to an embodiment of this application;
FIG. 16 is a schematic diagram of even yet another data transmission according to an embodiment of this application;
FIG. 17 is a schematic flowchart of a communication method 300 according to an embodiment of this application;
FIG. 18 is a schematic diagram of even yet another data transmission according to an embodiment of this application;
FIG. 19 is a schematic diagram of resource distribution according to an embodiment of this application;
FIG. 20 is a schematic diagram of a structure of a communication apparatus according to an embodiment of this application; and
FIG. 21 is a schematic diagram of a structure of another communication apparatus according to an embodiment of this application.

### DESCRIPTION OF EMBODIMENTS

The following describes embodiments of this application with reference to accompanying drawings in embodiments of this application.

To better understand a communication method disclosed in embodiments of this application, a communication system to which embodiments of this application are applicable is first described.

Technical solutions in embodiments of this application are applied to various communication systems, for example, a global system for mobile communications, a long term evolution (Long Term Evolution, LTE) system, a universal mobile communication system, or a 4th generation (4th Generation, 4G) mobile communication technology system. With continuous development of communication technologies, the technical solutions in embodiments of this application are applied to subsequent evolved communication systems, such as a new generation radio access technology (New Radio, NR) system.

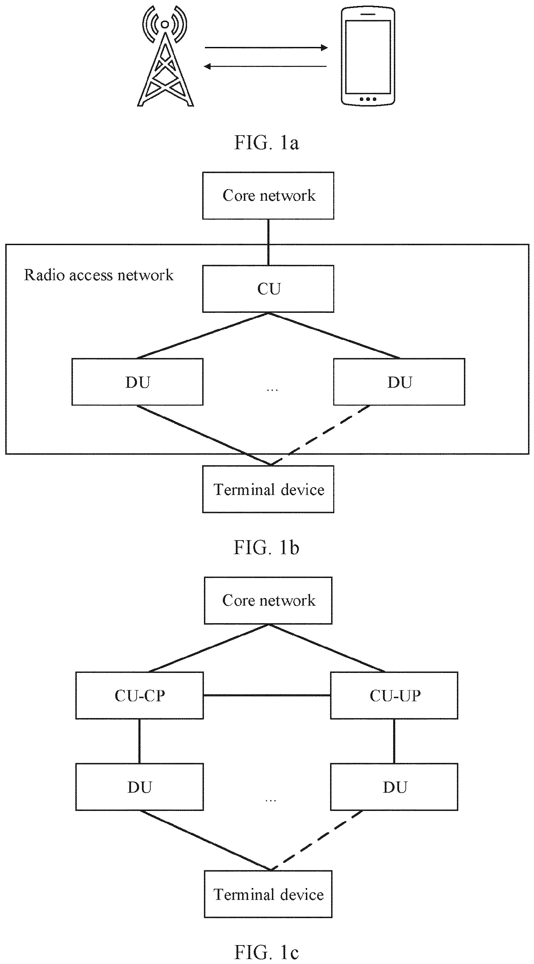

FIG. 1a is a schematic diagram of a structure of a communication system according to an embodiment of this application. The communication system may include but is not limited to one network device and one terminal device. The communication system may further include a channel for data transmission between the network device and the terminal device, for example, a transmission medium like an optical fiber, a cable, or an atmosphere. Quantities and forms of devices shown in FIG. 1a are used as examples and do not constitute a limitation on embodiments of this application. In actual application, two or more network devices and two or more terminal devices may be included. The communication system shown in FIG. 1a is described by using one network device and one terminal device as an example. In FIG. 1a, for example, the network device is a base station and the terminal device is a mobile phone.

In embodiments of this application, the network device may be a device having a wireless transceiver function or a chip that may be disposed in the device. The network device includes but is not limited to an evolved NodeB (evolved NodeB, eNB), a radio network controller (radio network controller, RNC), a NodeB (NodeB, NB), a network device controller (base station controller, BSC), a network device transceiver station (base transceiver station, BTS), a home network device (like a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission and reception point, TRP, or transmission point, TP), or the like; may be a device used in a 4G, 5G, or even 6G system, like an evolved NodeB (NodeB, eNB, or e-NodeB, evolved NodeB) in LTE, a base station (gNodeB or gNB) in NR, a transceiver point, or a transmission point (TRP or TP); or may be a network node that forms a gNB or a transmission point, for example, a baseband unit (BBU), a distributed unit (distributed unit, DU), a pico network device (Picocell), a femto network device (Femtocell), or a roadside unit (road side unit, RSU) in an intelligent driving scenario. The base station may be a macro base station, a micro base station, a pico base station, a small cell, a relay station, a balloon station, or the like.

In embodiments of this application, the terminal device may also be referred to as user equipment (user equipment, UE), a terminal, an access terminal, a subscriber unit, a subscriber station, a mobile station, a mobile console, a remote station, a remote terminal, a mobile device, a user terminal, a user agent, or a user apparatus, and is applied to a 4G, 5G, or even 6G system. The terminal device in embodiments of this application may be a joint device that transmits and receives a digital signal on a common telephone line, or may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), an RSU of the foregoing wireless terminal type, and the like.

FIG. 1b is a schematic diagram of a structure of another communication system according to an embodiment of this application. The communication system includes a core network (new core, CN) and a radio access network (radio access network, RAN). A network device (for example, a base station) in the RAN includes a baseband apparatus and a radio frequency apparatus. The baseband apparatus may be implemented by one or more nodes, and the radio frequency apparatus may be independently implemented remotely from the baseband apparatus, may be integrated into the baseband apparatus, or a part of the radio frequency apparatus is implemented remotely from the baseband apparatus and a remaining part is integrated into the baseband apparatus. The network device in the RAN may include a central unit (CU) and a distributed unit (DU), and a plurality of DUs may be controlled by one CU in a centralized manner. The CU and the DU may be divided based on protocol layer functions of a wireless network. For example, functions of a PDCP layer and a protocol layer above the PDCP layer are set on the CU, and functions of protocol layers below the PDCP layer, such as an RLC layer and a MAC layer, are set on the DU. It should be noted that division into the protocol layers is merely an example, and there may be another division of protocol layers. The radio frequency apparatus may not be disposed in the DU but is disposed remotely from the DU, may be integrated into the DU, or a part of the radio frequency apparatus is disposed remotely from the DU and a remaining part is integrated into the DU. This is not limited in this application.

FIG. 1c is a schematic diagram of a structure of still another communication system according to an embodiment of this application. Compared with that in an architecture shown in FIG. 1b, a control plane (CP) and a user plane (UP) of a CU may be separated and implemented by using different entities. The different entities are respectively a control plane CU entity (CU-CP entity) and a user plane CU entity (CU-UP entity). In this architecture, signaling generated by the CU may be sent to a terminal device by using DUs, or signaling generated by a terminal device may be sent to the CU by using DUs. The DU may transparently transmit the signaling to the terminal device or the CU by directly encapsulating the signaling at a protocol layer without parsing the signaling. In this architecture, the CU is classified as a network device on a RAN side. In addition, the CU may alternatively be classified as a network device on a CN side. This is not limited in this application.

For ease of understanding of embodiments disclosed in this application, the following two points are described.
(1) In embodiments disclosed in this application, an NR network scenario in a wireless communication network is used as an example of scenarios for description. It should be noted that the solutions in embodiments disclosed in this application are applied to another wireless communication network, and a corresponding name may also be replaced with a name of a corresponding function in the another wireless communication network.
(2) Aspects, embodiments, or features of this application are presented in embodiments disclosed in this application by describing a system that includes a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

Related concepts in embodiments of this application are then briefly described.

### 1. Extended reality (extended reality, XR) and XR application

XR refers to all real and virtual combined environments and related human-machine interaction generated by computer technologies and wearable devices. Three-dimensional (Three-Dimensional, 3D) interaction may be implemented by using XR technologies, and 3D interaction is more efficient than two-dimensional (Two-Dimensional, 2D) interaction. The XR technologies include a VR technology, an AR technology, and a mixed reality (mixed reality, MR) technology.

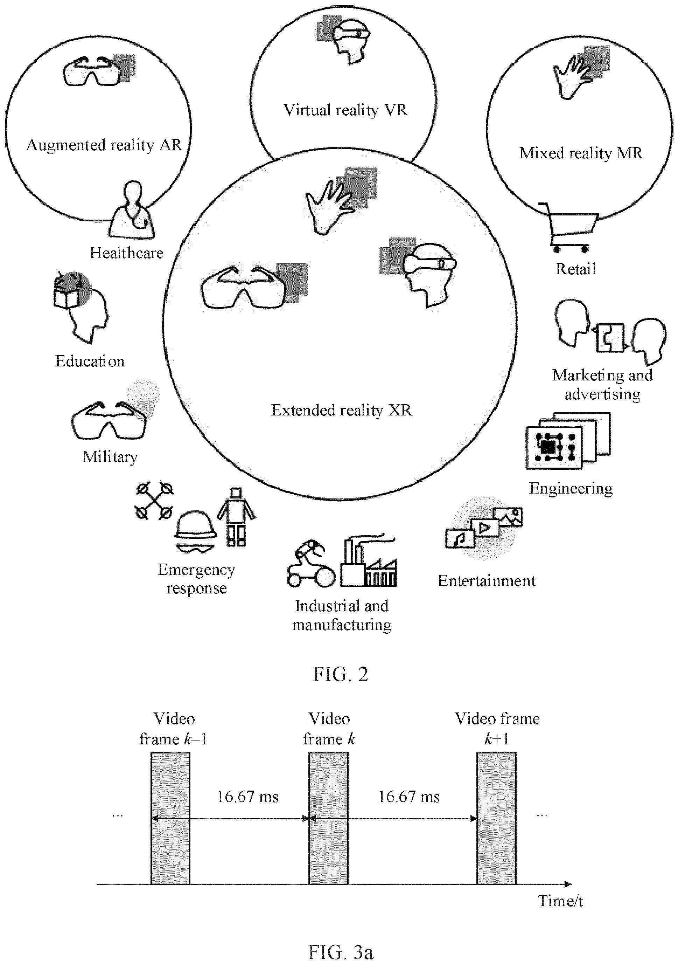

The XR technology can be applied to a plurality of different fields. FIG. 2 is a schematic diagram of application fields of the XR technology. It can be seen that the XR technology can be applied to fields such as healthcare (healthcare), education (education), military (military), emergency response (emergency response), industrial and manufacturing (industrial and manufacturing), entertainment (entertainment), engineering (engineering), marketing and advertising (marketing and advertising), and retail (retail).

### 2. Video frame and video frame rate

A video frame is a frame of picture in a plurality of frames of pictures that form a video.

A video frame rate refers to a quantity of video frames included in a video per second, and the unit is frames per second (frames per second, fps). A higher video frame rate indicates a larger quantity of video frames included in a video in unit time, and therefore, the video is played more smoothly. Generally, a minimum video frame rate is 24 fps. If a video frame rate is lower than 24 fps, a user experiences obvious frame freezing when watching a video. For a video with a picture changing slowly, a video frame rate is set to 30 fps, to provide good video viewing experience for a user. For a video with a picture changing sharply, a video frame rate is set to 60 fps or higher.

In addition, the video frame rate is proportional to a size of a video data packet. When video duration is fixed, a higher video frame rate indicates a larger quantity of video frames included in a video and a larger video data packet, namely, larger storage space required for storing the video. For example, in a video 1 and a video 2 that have same duration, a video frame rate of the video 1 is 60 fps, and a video frame rate of the video 2 is 30 fps. In this case, a quantity of video frames included in the video 1 is twice a quantity of video frames included in the video 2. It can be learned that, in the video 1 and the video 2 that have the same duration, a size of the video 1 is about twice a size of the video 2.

### 3. Video frame of an XR video service

An XR service includes an XR video service, a data packet of a video frame of the XR video service is large, a size of a data packet of each video frame complies with probability distribution, and the probability distribution includes but is not limited to truncated Gaussian distribution. Transmission of the video frame of the XR video service may be performed between a network device and a terminal device, so that a service corresponding to the XR video service is provided for a user.

When the network device and the terminal device perform downlink data transmission, a media server sends the video frame to the network device, and then the network device sends the received video frame to the terminal device.

In an ideal case, the media server periodically sends the video frame of the XR video service to the network device. In this case, the video frame of the XR video service periodically arrives at the network device, that is, a moment at which the video frame of the XR video service arrives at the network device is an expected moment. Periodicity of the video frame is a reciprocal of a video frame rate. In addition, common video frame rates in the XR video service include 30 fps, 60 fps, 90 fps, and 120 fps. For example, with reference to FIG. 3a, when the video frame rate in the XR video service is 60 fps, the periodicity of the video frame is 1/(60 fps)≈16.67 ms. In this case, the video frame of the XR video service arrives at the network device at the periodicity of 16.67 ms.

In an actual case, due to factors such as rendering, source coding, and routing path selection, on a basis of a feature that the video frame of the XR video service periodically arrives at the network device, jitter within a specific range exists between a moment at which the video frame actually arrives at the network device and the expected moment. In other words, the moment at which the video frame actually arrives at the network device may be exactly the expected moment, may be earlier than the expected moment, or may be later than the expected moment. The moment at which the video frame actually arrives at the network device is a moment at which the network device actually receives the video frame after the media server sends the video frame to the network device.

A jitter range between the moment at which the video frame actually arrives at the network device and the expected moment complies with a specific probability distribution in mathematical statistics. The probability distribution may be statistical distribution such as Gaussian distribution, Rayleigh distribution, or Rice distribution. For example, the probability distribution may be truncated Gaussian distribution in which an average value is 0 and a variance is 2 ms, and the jitter range between the moment at which the video frame actually arrives at the network device and the expected moment is [-4 ms, 4 ms].

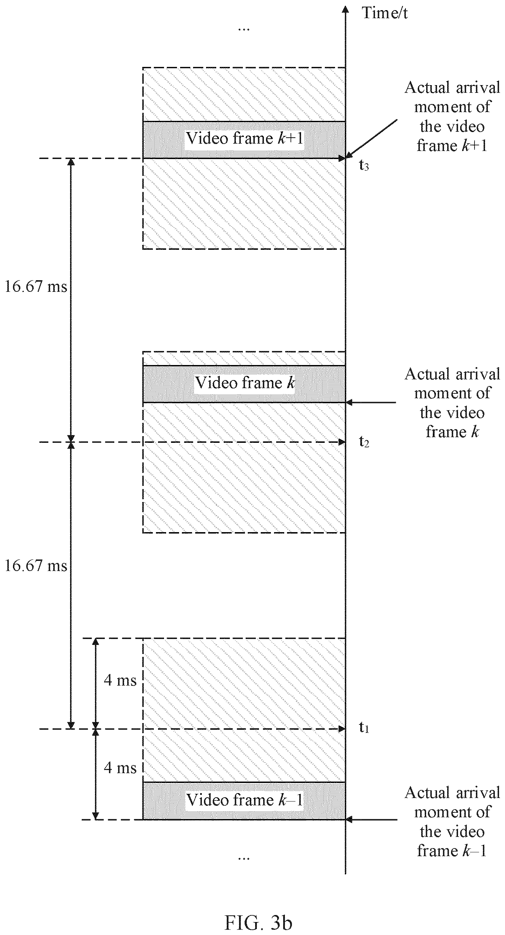

With reference to FIG. 3b, for example, the video frame rate of the XR video service is 60 fps and the jitter range is [-4 ms, 4 ms]. In FIG. 3b, an actual arrival moment of a video frame k-1 is earlier than an expected moment t₁, an actual arrival moment of a video frame k is later than an expected moment t₂, and an actual arrival moment of a video frame k+1 is just an expected moment t₃.

In addition, to meet a requirement of a user for ultimate smooth video watching, a transmission rate and a delay of the video frame of the XR video service are also required. For example, if the video frame rate is 60 fps and an average size of the data packet of each video frame is 750 kbits, the data rate at an application layer can reach 45 Mbps. In addition, for a VR or AR service type, a data packet delay budget (Packet Delay Budget, PDB) of a video frame of the VR or AR service type is 10 ms, that is, a time threshold from time when a media server sends the video frame to time when a terminal device successfully receives the video frame is 10 ms.

When the network device and the terminal device perform uplink data transmission, the terminal device obtains the video frame. After obtaining the video frame, the terminal device sends the video frame to the network device, and then the network device sends the received video frame to a media server. Related descriptions of the video frame of the XR video service are similar to related descriptions of the video frame in the downlink transmission data. A difference lies in that before the terminal device sends the video frame, jitter within a specific range may exist between a moment at which the terminal device actually obtains a data packet and an expected moment.

In this application, for the data packet with jitter, in downlink transmission, it indicates that jitter within the specific range exists between the moment at which the data in the data packet actually arrives at the network device and the expected moment; and in uplink transmission, it indicates that jitter within the specific range exists between the moment at which the terminal device actually obtains the data in the data packet and the expected moment.

### 4. Dynamic scheduling mechanism

In a dynamic scheduling mechanism, after a network device allocates a resource to a terminal device in a transmission timing interval (transmission timing interval, TTI), the terminal device may perform data transmission once on the resource. If the terminal device needs to perform data transmission again, the network device needs to reallocate a resource to the terminal device. The resource allocated by the network device to the terminal device is specified by using downlink control information (downlink control information, DCI) in a physical downlink control channel (physical downlink control channel, PDCCH). The TTI may be a slot, a subframe, a mini-slot, or the like.

### 5. Semi-persistent scheduling mechanism

In a semi-persistent scheduling mechanism, a network device may periodically allocate a resource to a specific terminal device. The resource allocated by the network device to the terminal device is specified by using DCI in a PDCCH scrambled by using a configured scheduling radio network temporary identifier (configured scheduling radio network temporary identifier, CS-RNTI). In other words, after configuring the resource, the network device may deliver, to the terminal device in one TTI, the PDCCH for specifying the resource. For each periodicity, the terminal device may perform data transmission on a resource in the periodicity, and the network device does not need to re-deliver, before the terminal device performs data transmission each time, a PDCCH for specifying a resource in the periodicity. It can be learned that the semi-persistent scheduling mechanism is featured by "one-time allocation, multiple-time use". When to-be-transmitted data has a periodic feature, compared with a dynamic scheduling mechanism, the semi-persistent scheduling mechanism reduces PDCCH overheads, reduces overheads of PDCCH detection performed by the terminal device, and further reduces power consumption of the terminal device.

When a resource in the semi-persistent scheduling mechanism is used to perform downlink data transmission, the semi-persistent scheduling mechanism may be referred to as a downlink semi-persistent scheduling (semi-persistent scheduling, SPS) mechanism, and periodicity of the resource configured in the SPS mechanism may be referred to as an SPS periodicity.

In the SPS mechanism, after a network device configures the resource, a terminal device cannot directly use the configured resource to perform data transmission, and the network device further needs to deliver a PDCCH for activating the resource. In addition, before releasing the resource, the network device may deliver a PDCCH for deactivating (or releasing) the resource.

The PDCCH for activating or deactivating the resource meets the following conditions:
(1) A cyclic redundancy check (Cyclic Redundancy Check, CRC) bit of the PDCCH is scrambled by using a CS-RNTI.
(2) A new data indicator (New Data Indicator, NDI) field is set to 0. For a DCI format 2/2A/2B/2C, an NDI field is for an enabled transport block (Transport Block, TB).

After the resource is activated, the terminal device considers that the resource is allocated in a subframe (referred to as an SPS subframe) that satisfies the following formula (in this case, a PDCCH does not need to be received): (numberOfSlotsPerFrame×SFN+slot number in the frame)=[(numberOfSlotsPerFrame×SFN_{start time}+slot_{start time})+n×periodicity×numberOfSlotsPerFrame/10]modulo(1024×numberOfSlotsPerFrame).

SFN_{start time} and Slot_{start time} are respectively a system frame number (System Frame Number, SFN) and a slot number in which transmission of a first physical downlink shared channel (Physical Downlink Shared Channel, PDSCH) after the PDCCH scrambled by using the CS-RNTI is activated is located. n>0 (an initial value is 0, and the value is increased by 1 each periodicity ends.)

When a resource in the semi-persistent scheduling mechanism is used to perform uplink data transmission, the semi-persistent scheduling mechanism may be referred to as a configured grant (configured grant, CG) mechanism, and periodicity of the resource configured in the CG mechanism may be referred to as CG periodicity. In the CG mechanism, a network device may not need to deliver a PDCCH for activating the resource, and after the network device configures the resource, a terminal device may directly use the resource to perform data transmission.

In addition, for the terminal device for which the resource is configured by using the semi-persistent scheduling mechanism, the network device may further configure a resource for the terminal device by using a dynamic scheduling mechanism. A value of a radio network temporary identifier (Radio Network Temporary Identifier, RNTI) for scrambling a PDCCH may be used to identify whether the resource specified by the PDCCH is configured by using the dynamic scheduling mechanism or configured by using the semi-persistent scheduling mechanism. If the PDCCH is scrambled by using a cell radio network temporary identifier (Cell-Radio Network Temporary Identifier, C-RNTI), the resource specified by the PDCCH is configured by using the dynamic mechanism. If the PDCCH is scrambled by using the CS-RNTI, the resource specified by the PDCCH is configured by using the semi-persistent scheduling mechanism.

### 6. Time unit and opportunity

A time unit may be one or more radio frames, one or more subframes, one or more slots, one or more mini-slots, one or more symbols, or the like. The symbol may be an orthogonal frequency division multiplexing (orthogonal frequency division multiplexing, OFDM) symbol, a discrete fourier transform spread spectrum orthogonal frequency division multiplexing (discrete fourier transform spread spectrum orthogonal frequency division multiplexing, DFT-S-OFDM) symbol, or the like. In addition, the time unit may be at least one of a millisecond (millisecond, ms for short), a second (second, s for short), a subframe, a mini-slot, and a symbol. The mini-slot includes a plurality of symbols.

An opportunity in this application is one or more time units in which a resource for data transmission is located. For example, one or more time units in which a resource for downlink data transmission is located in an SPS mechanism may be referred to as an SPS opportunity, and one or more time units in which a resource for uplink data transmission is located in a CG mechanism may be referred to as a CG opportunity. In addition, in this application, data transmission within the opportunity means data transmission on a resource within the opportunity.

### 7. Opportunity configuration information

Opportunity configuration information is information about an opportunity determined by a network device. The information may be control information or higher layer signaling. For example, the control information may be DCI or uplink control information (downlink control information, UCI). For example, the higher layer signaling may be radio resource control (Radio Resource Control, RRC) signaling or media access control layer control unit (media access control element, MAC CE) signaling. Types of different signaling may be the same or may be different. For example, the information may be DCI or UCI, or may be RRC signaling, or may be MAC CE signaling.

Descriptions are provided below by using an example in which opportunity configuration information of an SPS opportunity is RRC signaling.

The opportunity configuration information of the SPS opportunity may be carried in SPS-Config of the RRC signaling. Parameters in SPS-Config include SPS periodicity (periodicity), SPS hybrid automatic retransmission request (hybrid automatic retransmission request, HARQ) processes (nrofHARQ-Processes), a HARQ resource (n1PUCCH-AN) carrying SPS HARQ feedback information in a physical uplink control channel (Physical Uplink Control Channel, PUCCH), a modulation and coding scheme (Modulation and Coding Scheme, MCS) table (mcs-Table) for data transmission, an SPS index (sps-ConfigIndex), an offset (harq-ProcID-Offset) for deducing an identification (identification, ID) of a HARQ process, a parameter (periodicityExt) for calculating SPS periodicity, a HARQ-acknowledgment (ACK) codebook index (harq-CodebookID), SPS PDSCH repetition count (pdsch-AggregationFactor), and the like. If a network device configures periodicityExt in SPS-Config, after receiving the RRC signaling, a terminal device may ignore periodicity in SPS-Config.

### 8. Feedback information

In this application, feedback information is hybrid automatic retransmission request (Hybrid Automatic Retransmission Request, HARQ) feedback information. The feedback information includes acknowledgment (ACK) information and negative acknowledgment (NACK) information. Specifically, after receiving a PDSCH, a data receiving device determines whether data carried by the PDSCH is correctly received, and if the data carried by the PDSCH is correctly received, determines that the feedback information is the ACK information; or if the data carried by the PDSCH is not correctly received, determines that the feedback information is the NACK information. Then, the data receiving device sends the feedback information to a data sending device, so that the data sending device can perform fast retransmission on lost or error data based on the feedback information.

In a plurality of services implemented by data transmission between a network device and a terminal device, data packets in some services are large and have a periodic transmission feature, for example, a data packet in an XR video service. For this type of service, the network device configures an opportunity by using a semi-persistent scheduling mechanism, for data transmission.

For a service with a large data packet, transmission of the data packet of the service needs to be performed within a plurality of opportunities. In addition to one opportunity in current periodicity for transmission, an opportunity in next periodicity also needs to be used. Consequently, a data transmission delay between a network device and a terminal device may be large.

In addition, transmission of a data packet with jitter cannot be performed within an opportunity in current periodicity, and needs to be performed within an opportunity in next periodicity. Consequently, a data transmission delay between a network device and a terminal device may be large.

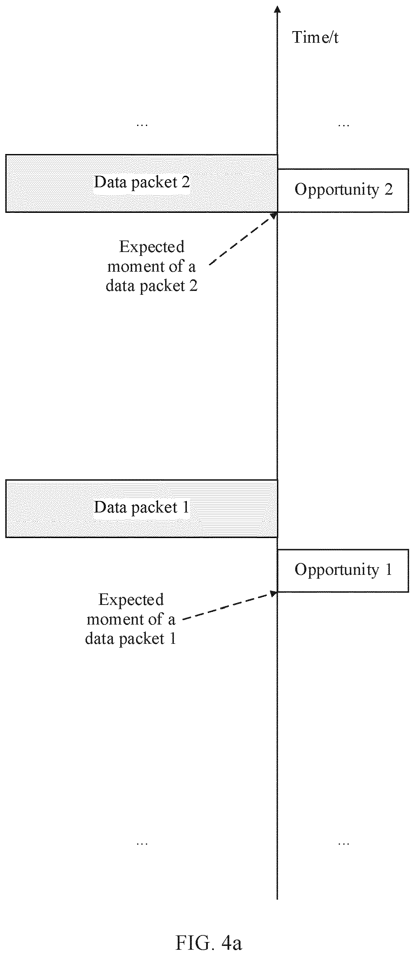

For example, as shown in FIG. 4a, if a network device configures an opportunity at an expected moment of each data packet, and it can be learned from FIG. 4a that a data packet 1 arrives later than an expected moment, transmission of the data packet 1 cannot be performed within an opportunity 1 in current periodicity, and needs to be performed within an opportunity 2 in next periodicity. It can be learned that a data transmission delay of transmission of the data packet 1 between the network device and the terminal device is large.

This application provides a communication method 100 for downlink transmission between a network device and a terminal device. In the communication method 100, the network device may send data within a plurality of opportunities within a first time range. This helps send a large data packet in a centralized manner within the first time range, and reduces a data transmission delay. In addition, when the data arrives earlier or later than expected, the network device can send the data within the front or the back opportunity in the plurality of opportunities in time domain, thereby resolving a data transmission delay problem caused by jitter of an XR service.

This application provides a communication method 200 for uplink transmission between a network device and a terminal device. In the communication method 200, the terminal device may send data within a plurality of opportunities within a first time range. This helps send a large data packet in a centralized manner within the first time range, and reduces a data transmission delay. In addition, when the data arrives earlier (obtained earlier) or later (obtained later) than expected, the terminal device can send the data within the front or the back opportunity in the plurality of opportunities in time domain, thereby resolving a data transmission delay problem caused by jitter of an XR service.

In addition, if a minimum unit of resource periodicity (for example, SPS periodicity or a CG periodicity) configured by using the semi-persistent scheduling mechanism is 1 ms, that is, the resource periodicity is an integer multiple of 1 ms, for data whose periodicity is in a decimal form in the XR service, the resource periodicity configured by using the semi-persistent scheduling mechanism does not match the periodicity of the data. Consequently, transmission of the data cannot be performed on a corresponding resource, and a large data transmission delay and large resource waste may be caused.

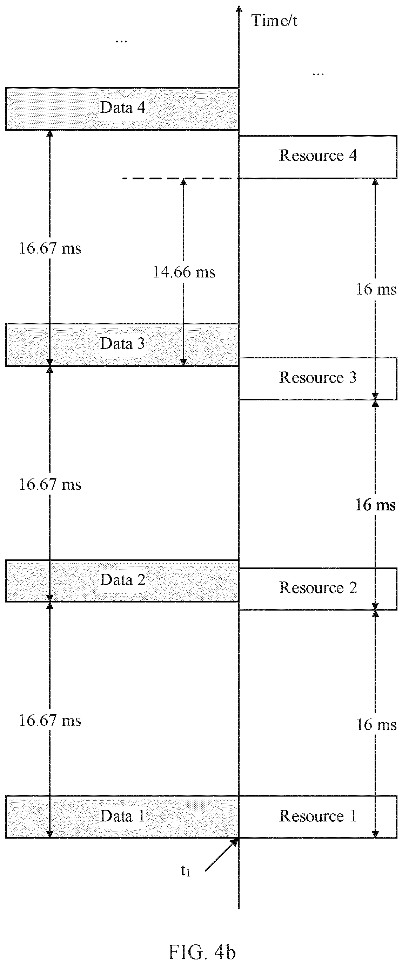

For example, as shown in FIG. 4b, when a video frame rate of an XR video service is 60 fps, periodicity of corresponding data is approximately 16.67 ms, resource periodicity of a resource configured by a network device is 16 ms, and both a start location of the data and a start location of the resource are a moment t₁ in time domain. In FIG. 4b, transmission of data 3 cannot be performed on a corresponding resource 3, and needs to be performed on a resource 4 corresponding to data 4. It can be learned that a data transmission delay corresponding to the data 3 is large, namely, 14.66 ms. As a result, the resource 3 is wasted, and transmission of the data 4 cannot be performed on the corresponding resource 4.

Embodiments of this application provide a communication method 300. The communication method 300 helps match a plurality of time ranges with periodicity in which data in an XR service is in a decimal form, so that transmission of data in each periodicity can be performed on a resource in a time range that matches the periodicity, thereby reducing a data transmission delay caused by mismatch between the periodicity of the resource and the periodicity of data in the XR service.

Embodiments of this application are described below with reference to the accompanying drawings.

### Embodiment 1: Communication method 100

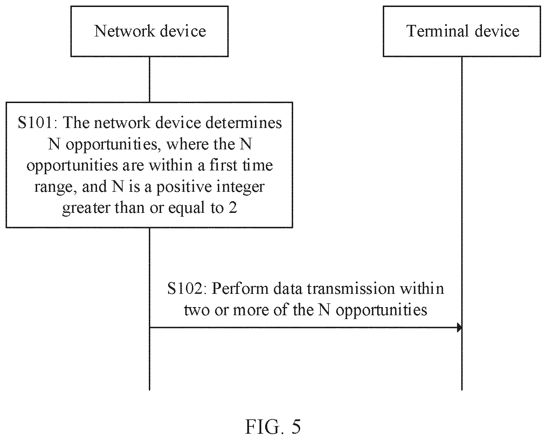

FIG. 5 is a schematic flowchart of the communication method 100 according to this embodiment of this application. The communication method 100 is described from a perspective of interaction between a network device and a terminal device. The communication method 100 includes the following steps.

S101: The network device determines N opportunities.

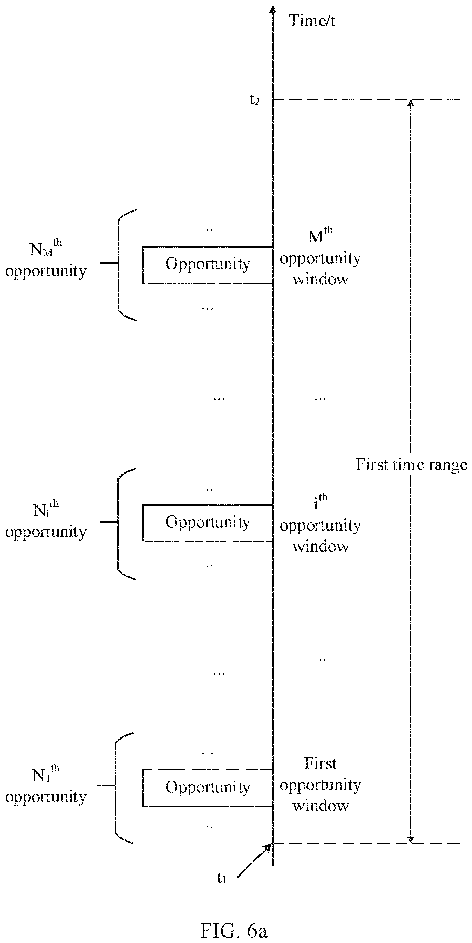

As shown in FIG. 6a, the N opportunities are within a first time range [t₁, t₂], where N is a positive integer greater than or equal to 2. In addition, the first time range [t₁, t₂] includes M opportunity windows, and an i^{th} opportunity window includes Ni opportunities in the N opportunities. Ni is a positive integer, M is a positive integer, and i=1, 2, ..., M. In addition, a first time unit in the first time range is a first time unit within a first opportunity in the N opportunities in time domain. In this application, the i^{th} opportunity window in the M opportunity windows indicates an i^{th} opportunity window in the M opportunity windows in time domain.

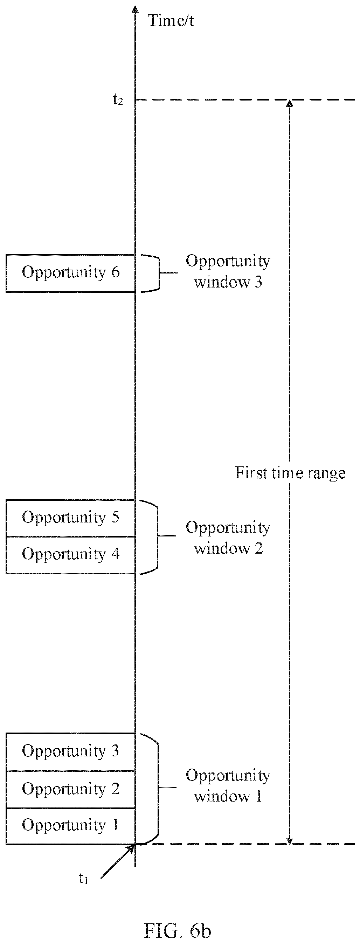

For example, as shown in FIG. 6b, N=6, and M=3. The six opportunities determined by the network device are an opportunity 1, an opportunity 2, an opportunity 3, an opportunity 4, an opportunity 5, and an opportunity 6. The three opportunity windows included in the first time range [t₁, t₂] are an opportunity window 1, an opportunity window 2, and an opportunity window 3. The opportunity window 1 includes the opportunity 1, the opportunity 2, and the opportunity 3, the opportunity window 2 includes the opportunity 4 and the opportunity 5, and the opportunity window 3 includes the opportunity 6.

Optionally, each opportunity may carry different TBs instead of different redundancy versions of one TB. This implementation helps transmission of a large data packet between the network device and the terminal device within the first time range.

Optionally, N may be determined by the network device based on average transmission duration of the data packet. The average transmission duration of the data packet may be determined by the network device based on a size of the data packet, a current channel condition, an available transmission resource, and the like, so that transmission of the large data packet or a data packet with jitter can be performed between the network device and the terminal device within the N opportunities, thereby reducing a data transmission delay.

Optionally, the opportunity in the communication method 100 may be an opportunity for downlink transmission, for example, an SPS opportunity. This is not limited herein. When the opportunity in the communication method 100 is the SPS opportunity, the first time unit within the first opportunity in the N opportunities in time domain is a time unit used when a resource in the first opportunity is activated on a PDCCH.

Optionally, the N opportunities may include both an opportunity for downlink transmission and an opportunity for uplink transmission. A quantity of opportunities for downlink transmission needs to be greater than or equal to 2. Correspondingly, in the communication method 100, when sending data, the network device sends the data within two or more of the opportunities for downlink transmission.

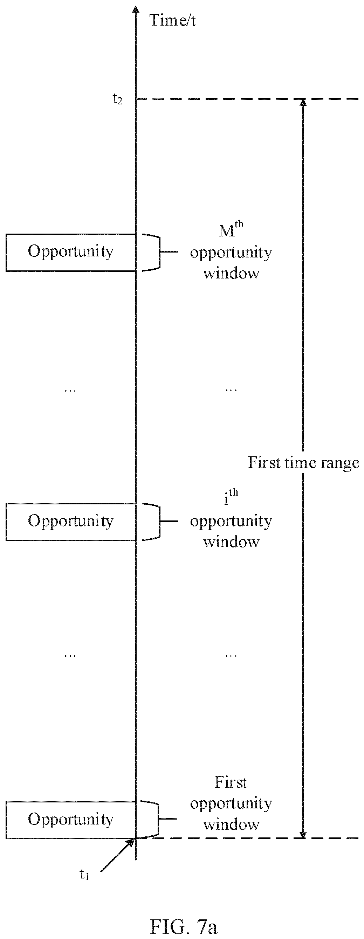

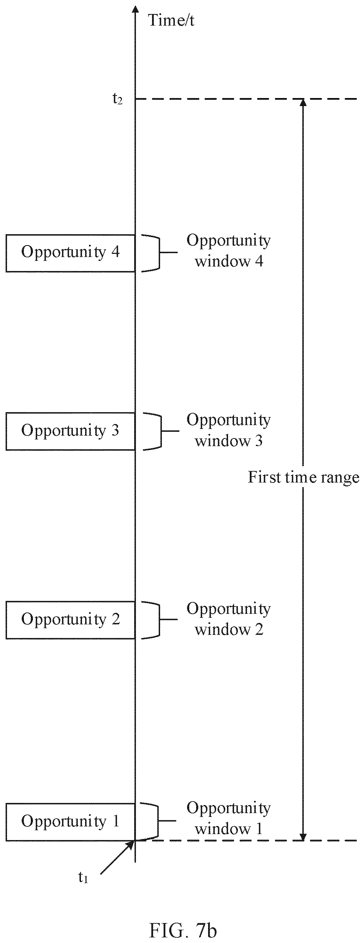

In an optional implementation, as shown in FIG. 7a, M=N, and each of the M opportunity windows includes one of the N opportunities. For example, as shown in FIG. 7b, M=N=4, and the four opportunities determined by the network device are an opportunity 1, an opportunity 2, an opportunity 3, and an opportunity 4. The four opportunity windows included in the first time range [t₁, t₂] are an opportunity window 1, an opportunity window 2, an opportunity window 3, and an opportunity window 4. The opportunity window 1 includes the opportunity 1, the opportunity window 2 includes the opportunity 2, the opportunity window 3 includes the opportunity 3, and the opportunity window 4 includes the opportunity 4.

In another optional implementation, M<N, the M opportunity windows include X opportunity windows, and each of the X opportunity windows includes two or more of the N opportunities. X is a positive integer less than or equal to M. In other words, if X=M, each of the M opportunity windows includes two or more of the N opportunities. If X<M, each of the X opportunity windows includes two or more of the N opportunities, and each of (M-X) opportunity windows in the M opportunity windows except the X opportunity windows includes one of the N opportunities.

Optionally, when X is equal to 1, an interval between any two adjacent opportunities in the X opportunity windows is T₁ time units, where T₁ is 0 or a positive number. Optionally, the method may further include: The network device sends a value of T₁ to the terminal device. It can be learned that when intervals between any two adjacent opportunities in the X opportunity windows are the same, an information amount of signaling that is sent by the network device to the terminal device and indicates the value of T₁ is small. This helps save communication resources.

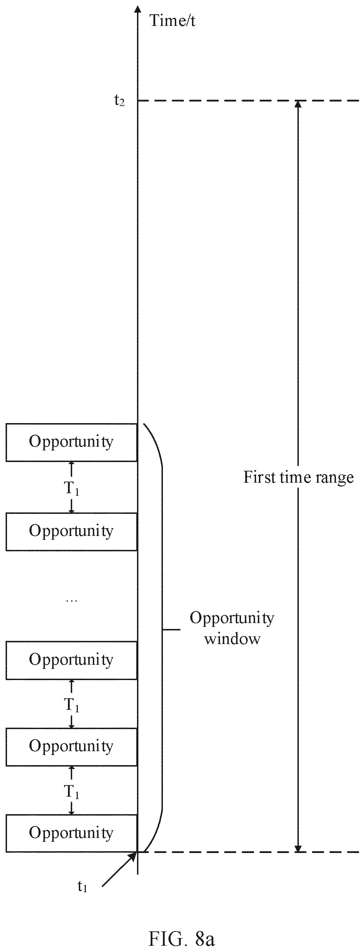

When 1=X=M<N, as shown in FIG. 8a, the first time range [t₁, tz] includes one opportunity window, the opportunity window includes the N opportunities, and an interval between any two adjacent opportunities in the N opportunities is T₁ time units. In this application, an interval between two adjacent opportunities may be an interval between an end location of a last time unit of a previous opportunity in the two opportunities and a start location of a first time unit of a next opportunity in the two opportunities in time domain.

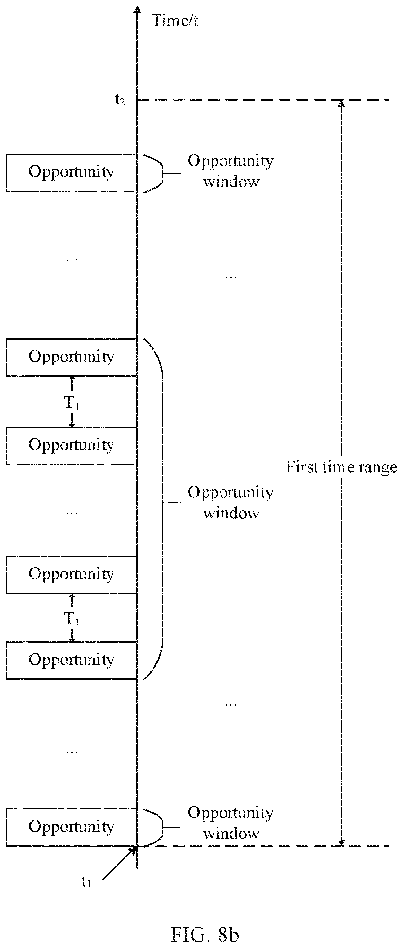

When 1=X<M<N, as shown in FIG. 8b, in the M opportunity windows included in the first time range [t₁, t₂], one opportunity window includes two or more of the N opportunities, and an interval between any two adjacent opportunities in the two or more opportunities included in the opportunity window is T₁ time units. In addition, in the M opportunity windows, each of (M-1) opportunity windows except the foregoing opportunity window includes one of the N opportunities.

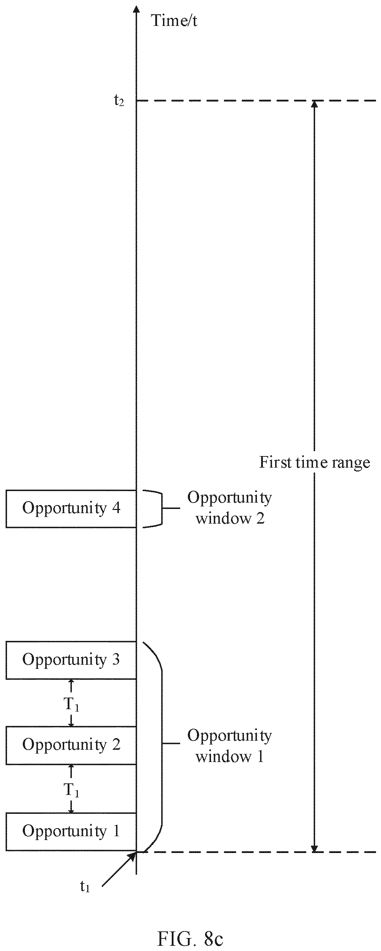

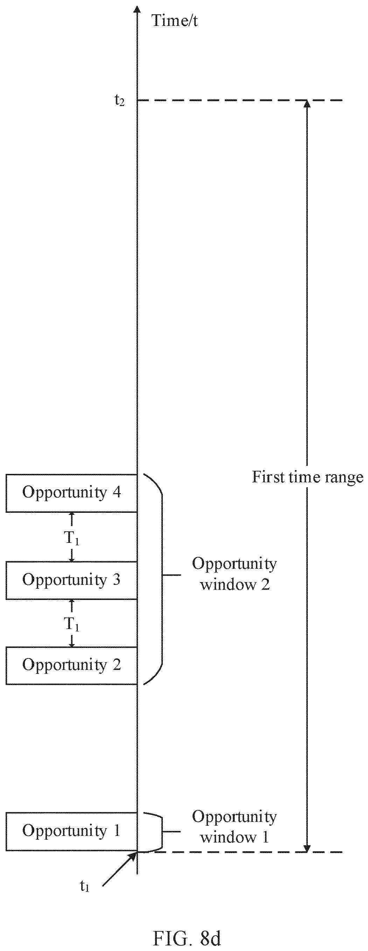

In addition, when 1=X<M<N, the X opportunity windows may be any one of the M opportunity windows. For example, with reference to FIG. 8c and FIG. 8d, when X=1, M=2, and N=4, the four opportunities determined by the network device are an opportunity 1, an opportunity 2, an opportunity 3, and an opportunity 4, the two opportunity windows included in the first time range [t₁, t₂] are an opportunity window 1 and an opportunity window 2, and the X opportunity windows include three of the N opportunities. As shown in FIG. 8c, the X opportunity windows are a first opportunity window in the two opportunity windows, namely, the opportunity window 1. The opportunity window 1 includes the opportunity 1, the opportunity 2, and the opportunity 3. An interval between the opportunity 1 and the opportunity 2 is T₁ time units, and an interval between the opportunity 2 and the opportunity 3 is T₁ time units. The opportunity window 2 includes the opportunity 4. Alternatively, as shown in FIG. 8d, the X opportunity windows are a second opportunity window in the two opportunity windows, namely, the opportunity window 2. The opportunity window 2 includes the opportunity 2, the opportunity 3, and the opportunity 4. An interval between the opportunity 2 and the opportunity 3 is T₁ time units, and an interval between the opportunity 3 and the opportunity 4 is T₁ time units. The opportunity window 1 includes the opportunity 1.

In addition, in this application, the value of T₁ may be customized by a user, or may be determined through negotiation between the network device and the terminal device. For example, the value of T₁ may be determined based on actual situations such as a requirement of a communication system on a data transmission delay, resource utilization, or a jitter range of a data packet.

The following describes the value of T₁ by using an example in which 1=X=M<N.

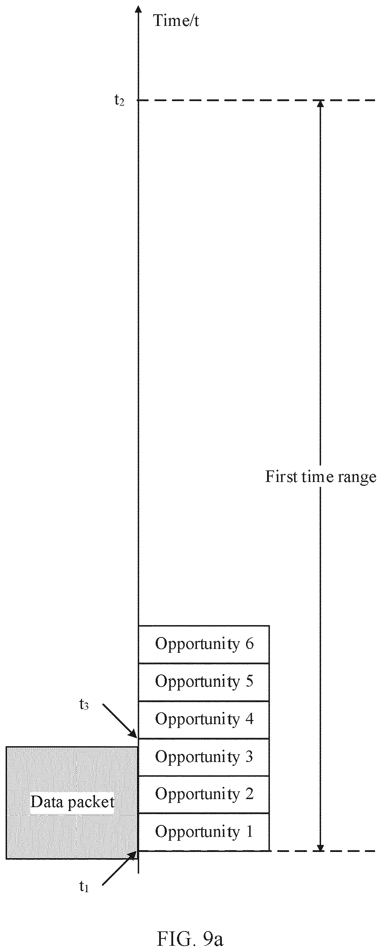

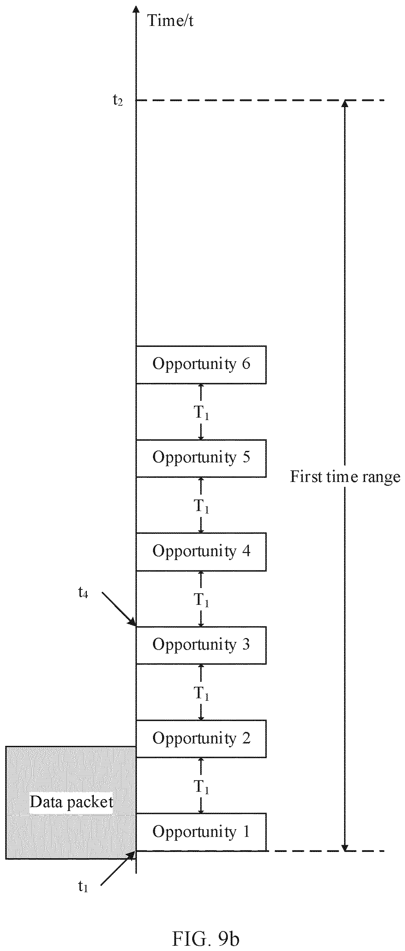

If the communication system has a high requirement on the data transmission delay, T₁ may be set to 0. For example, with reference to FIG. 9a and FIG. 9b, X=M=1, and N=6. The six opportunities determined by the network device are an opportunity 1, an opportunity 2, an opportunity 3, an opportunity 4, an opportunity 5, and an opportunity 6, and the six opportunities are within the first time range [t₁, t₂]. There is a to-be-transmitted data packet before a moment t₁, and three opportunities need to be used for transmission. As shown in FIG. 9a, when T₁ is 0, the network device may perform transmission of data in the data packet within the opportunity 1, the opportunity 2, and the opportunity 3, that is, transmission of the data packet is performed before a moment t₃. As shown in FIG. 9b, when T₁ is a positive number, the network device may perform transmission of data in the data packet within the opportunity 1, the opportunity 2, and the opportunity 3, that is, transmission of the data packet is performed before a moment t₄. The moment t₄ is after the moment t₃. It can be learned that when T₁ is 0, the network device can perform transmission of the large data packet in a centralized manner in time, thereby further reducing the data transmission delay.

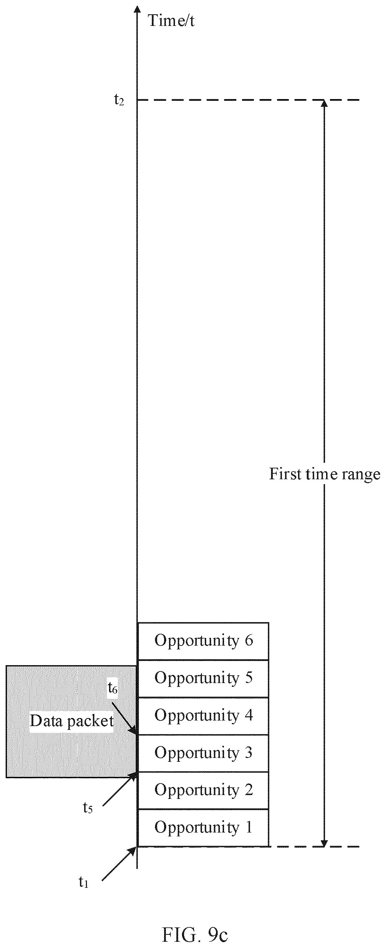

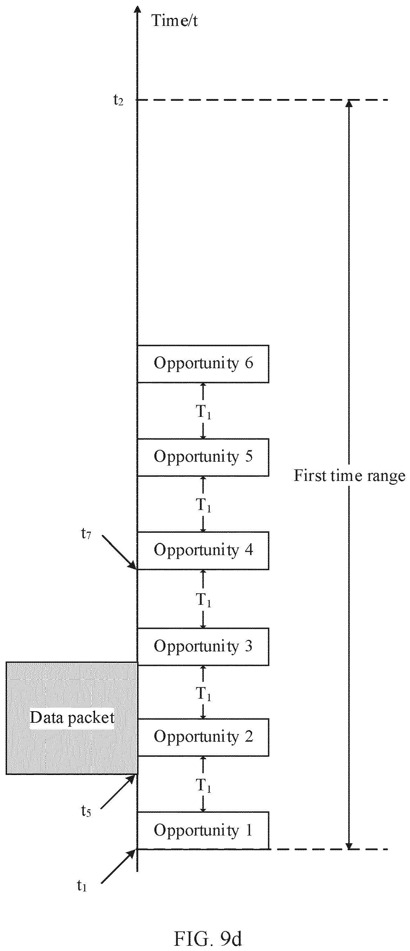

If the communication system has a high requirement on the resource utilization, T₁ may be set to a positive number. For example, for the data packet that arrives at the network device later than the expected moment, resource waste that may be generated when T₁ is the positive number is less than resource waste that may be generated when T₁ is 0. For example, with reference to FIG. 9c and FIG. 9d, X=M=1, N=6, and the six opportunities determined by the network device are an opportunity 1, an opportunity 2, an opportunity 3, an opportunity 4, an opportunity 5, and an opportunity 6, and the six opportunities are within the first time range [t₁, t₂]. In addition, there is a to-be-transmitted data packet before a moment t₅. The moment t₅ is after a moment t₁. As shown in FIG. 9c, when T₁ is 0, the network device may start to perform transmission of data in the data packet within the opportunity 3, and the opportunity 1 and the opportunity 2 may be wasted. As shown in FIG. 9d, when T₁ is a positive number, the network device may start to perform transmission of data in the data packet within the opportunity 2, and the opportunity 1 may be wasted. It can be learned that resource waste that may be generated when T₁ is the positive number is less than resource waste that may be generated when T₁ is 0. In other words, when T₁ is the positive number, resource utilization can be improved.

In the actual situation, if the jitter range of the data packet is large, T₁ may be a positive number. For example, with reference to FIG. 9c and FIG. 9d, the to-be-transmitted data packet needs to be transmitted within three opportunities. As shown in FIG. 9c, when T₁ is 0, the network device may perform transmission of, within the first time range, the data packet at a moment t₆ and the data packet before the moment t₆. As shown in FIG. 9d, when T₁ is the positive number, the network device may perform transmission of, within the first time range, the data packet at a moment t₇ and the data packet before the moment t₇. The moment t₇ is after the moment t₆. If the network device needs to perform transmission of, within the first time range, the data packet at the moment t₇ and the data packet before the moment t₇, a quantity of opportunities determined when T₁ is 0 needs to be greater than a quantity of opportunities determined when T₁ is the positive number. It can be learned that, when T₁ is the positive number, this implementation can better resolve the data transmission delay problem caused by jitter in the data, so that transmission of the data in the data packet can be completed within a PDB threshold. This avoids resource waste and energy consumption caused by retransmission of the data packet when transmission of data in the data packet is performed beyond the PDB threshold, and improves energy efficiency of data transmission.

Optionally, when X is greater than or equal to 2, an interval between any two adjacent opportunities in each of the X opportunity windows is T₂ time units, where T₂ is 0 or a positive number. In addition, quantities of opportunities included in each of the X opportunity windows may be the same or different. Optionally, the method may further include: The network device sends a value of T₂ to the terminal device. It can be learned that when intervals between any two adjacent opportunities in each of the X opportunity windows are the same, an information amount of signaling that is sent by the network device to the terminal device and indicates the value of T₂ is small. This helps save communication resources.

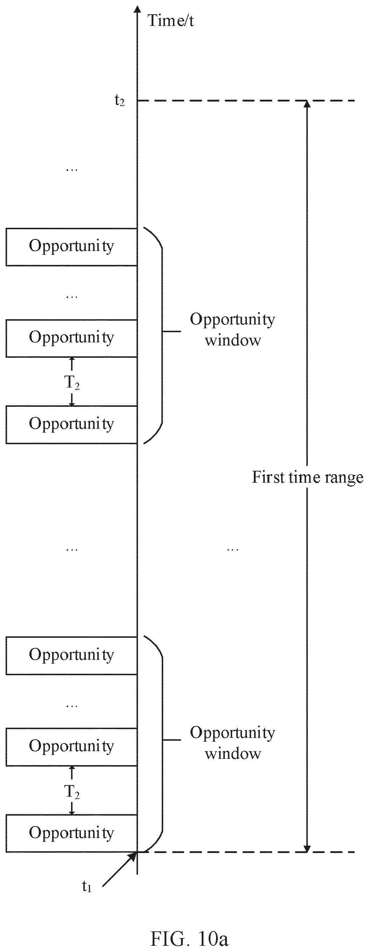

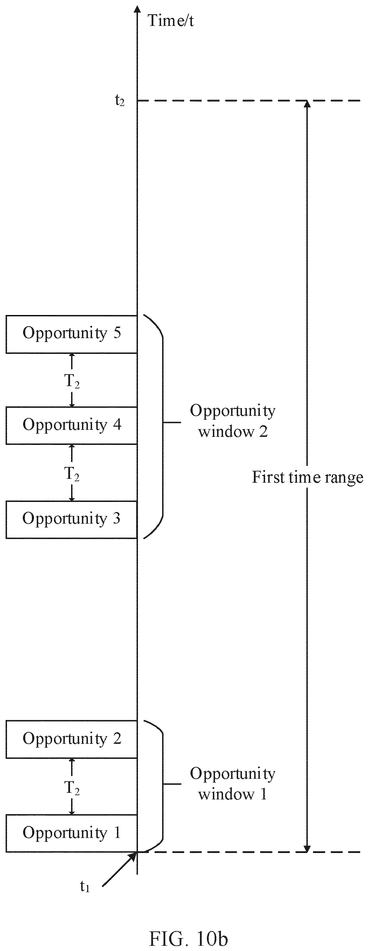

When 2≤X=M<N, as shown in FIG. 10a, in the M opportunity windows included in the first time range [t₁, t₂], each opportunity window includes two or more of the N opportunities, and an interval between any two adjacent opportunities in each opportunity window is T₂ time units. For example, as shown in FIG. 10b, X=M=2, and N=5. The five opportunities determined by the network device are an opportunity 1, an opportunity 2, an opportunity 3, an opportunity 4, and an opportunity 5, and the two opportunity windows included in the first time range [t₁, t₂] are an opportunity window 1 and an opportunity window 2. The opportunity window 1 includes the opportunity 1 and the opportunity 2, and an interval between the opportunity 1 and the opportunity 2 is T₂ time units. The opportunity window 2 includes the opportunity 3, the opportunity 4, and the opportunity 5, an interval between the opportunity 3 and the opportunity 4 is T₂ time units, and an interval between the opportunity 4 and the opportunity 5 is T₂ time units.

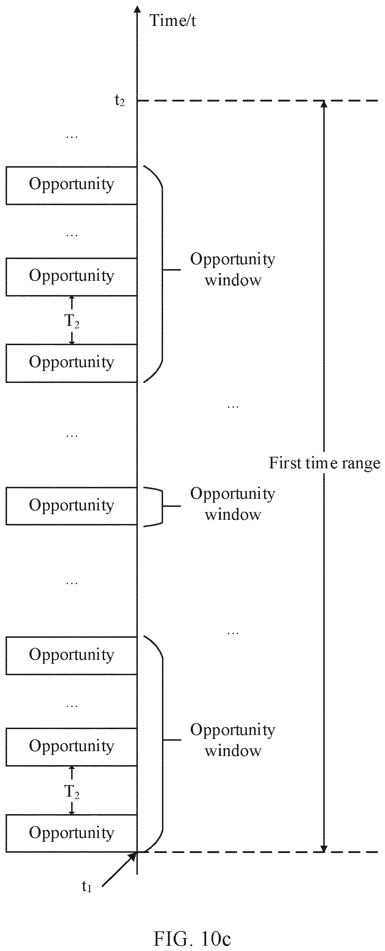

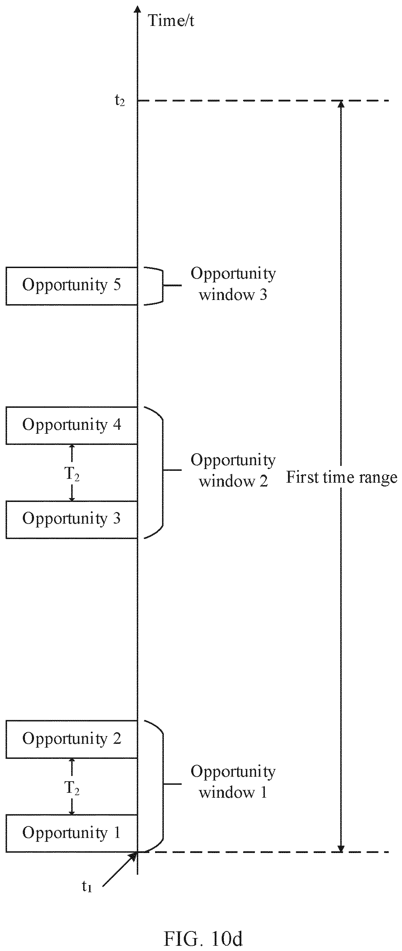

When 2≤X<M<N, as shown in FIG. 10c, in the M opportunity windows, each of the X opportunity windows includes two or more of the N opportunities, and an interval between any two adjacent opportunities in each of the X opportunity windows is T₂ time units. In addition, each of (M-X) opportunity windows in the M opportunity windows except the X opportunity windows includes one of the N opportunities. For example, as shown in FIG. 10d, X=2, M=3, and N=5. The five opportunities determined by the network device are an opportunity 1, an opportunity 2, an opportunity 3, an opportunity 4, and an opportunity 5, and the two opportunity windows included in the first time range [t₁, t₂] are an opportunity window 1, an opportunity window 2, and an opportunity window 3. The opportunity window 1 includes the opportunity 1 and the opportunity 2, and an interval between the opportunity 1 and the opportunity 2 is T₂ time units. The opportunity window 2 includes the opportunity 3 and the opportunity 4, and an interval between the opportunity 3 and the opportunity 4 is T₂ time units. The opportunity window 3 includes the opportunity 5.

In addition, when 2≤X<M<N, the X opportunity windows may be X consecutive opportunity windows in the M opportunity windows, or may be X non-consecutive opportunity windows in the M opportunity windows.

In addition, in this application, the value of T₂ may be customized by a user, or may be determined through negotiation between the network device and the terminal device. For example, the value of T₂ may be determined based on actual situations such as a requirement of a communication system on a data transmission delay, resource utilization, or a jitter range of a data packet. Similar to the value of T₁, if the communication system has a high requirement on the data transmission delay, T₂ may be set to 0. If the communication system has a high requirement on the resource utilization, T₂ may be set to a positive number. If the jitter range of the data packet is large in the actual situation, T₂ may be set to a positive number, so that transmission of the data in the data packet can be completed within a PDB threshold. This avoids resource waste and energy consumption caused by retransmission of the data packet when transmission of data in the data packet is performed beyond the PDB threshold, and improves energy efficiency of data transmission.

Optionally, when X is greater than or equal to 2, intervals between any two adjacent opportunities in different opportunity windows in the X opportunity windows may be different. Because jitter within the specific range exists between the actual arrival moment and the expected moment of the data, and jitter complies with a specific probability distribution in mathematical statistics, a value of an interval between two adjacent opportunities in opportunities configured by the network device may be small near a moment at which a data packet arrival probability is high in a plurality of moments in the jitter range, so that a data transmission delay can be reduced, and transmission of the data in the data packet can be completed within a PDB threshold. This avoids resource waste and energy consumption caused by retransmission of the data packet when transmission of data in the data packet is performed beyond the PDB threshold, and improves energy efficiency of data transmission. A value of an interval between two adjacent opportunities in the opportunities configured by the network device may be large near a moment at which a data packet arrival probability is low in the plurality of moments in the jitter range. This helps reduce resource waste.

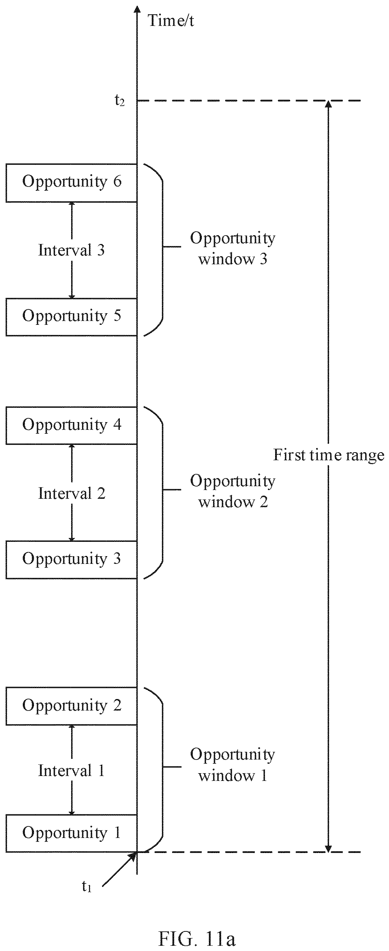

In addition, an interval between any two adjacent opportunities in each opportunity window may be customized by a user, or may be determined through negotiation between the network device and the terminal device. For example, as shown in FIG. 11a, X=3, and the first time range [t₁, t₂] includes an opportunity window 1, an opportunity window 2, and an opportunity window 3. The opportunity window 1 includes an opportunity 1 and an opportunity 2, and an interval between the opportunity 1 and the opportunity 2 is an interval 1. The opportunity window 2 includes an opportunity 3 and an opportunity 4, and an interval between the opportunity 3 and the opportunity 4 is an interval 2. The opportunity window 3 includes an opportunity 5 and an opportunity 6, and an interval between the opportunity 5 and the opportunity 6 is an interval 3. The interval 1, the interval 2, and the interval 3 may have different values.

Optionally, when a quantity of opportunities included in an opportunity window in the X opportunity windows is greater than or equal to 3, intervals between any two adjacent opportunities in the opportunity window may be different. Because jitter within the specific range exists between the actual arrival moment and the expected moment of the data, and jitter complies with a specific probability distribution in mathematical statistics, a value of an interval between two adjacent opportunities in opportunities configured by the network device may be small near a moment at which a data packet arrival probability is high in a plurality of moments in the jitter range. This can reduce a data transmission delay, and helps improve energy efficiency of data transmission. A value of an interval between two adjacent opportunities in the opportunities configured by the network device may be large near a moment at which a data packet arrival probability is low in the plurality of moments in the jitter range. This helps reduce resource waste.

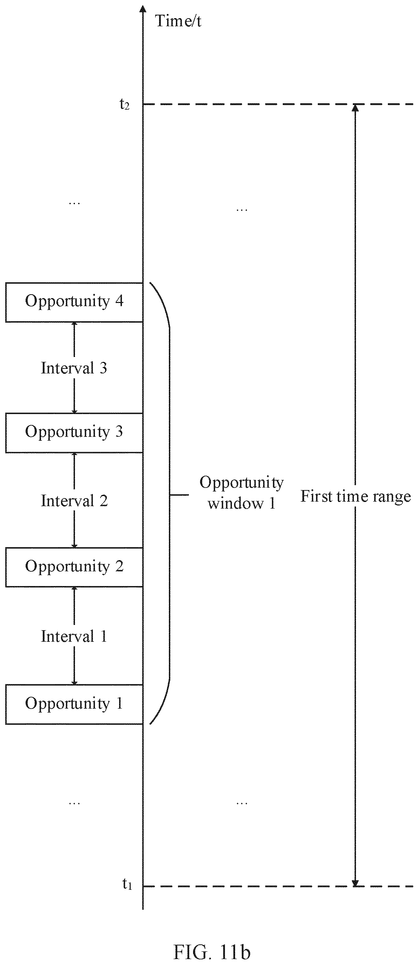

In addition, an interval between any two adjacent opportunities may be customized by a user, or may be determined through negotiation between the network device and the terminal device. For example, as shown in FIG. 11b, an opportunity window 1 in the X opportunity windows includes four opportunities. The four opportunities are an opportunity 1, an opportunity 2, an opportunity 3, and an opportunity 4. An interval between the opportunity 1 and the opportunity 2 is an interval 1, an interval between the opportunity 2 and the opportunity 3 is an interval 2, and an interval between the opportunity 3 and the opportunity 4 is an interval 3. The interval 1, the interval 2, and the interval 3 may have different values.

In an optional implementation, when M is greater than or equal to 2, an interval between any two adjacent opportunity windows in the M opportunity windows is T₃ time units, and T₃ is 0 or a positive number. Optionally, the method may further include: The network device sends a value of T₃ to the terminal device. It can be learned that when intervals between any two adjacent opportunity windows in the M opportunity windows are the same, an information amount of signaling that is sent by the network device to the terminal device and indicates the value of T₃ is small. This helps save communication resources.

For example, M=3, an interval between a first opportunity window and a second opportunity window is T₃ time units, and an interval between the second opportunity window and a third opportunity window is T₃ time units. In this application, an interval between two adjacent opportunity windows may be an interval between an end location of a last time unit of an opportunity included in a previous opportunity window in the two opportunity windows and a start location of a first time unit of an opportunity included in a next opportunity window in the two opportunity windows in time domain.

In addition, in this application, the value of T₃ may be customized by a user, or may be determined through negotiation between the network device and the terminal device. For example, the value of T₃ may be determined based on actual situations such as a subcarrier spacing, a requirement of a communication system on a data transmission delay and/or resource utilization, or a jitter range of a data packet. Similar to the value of T₁, if the communication system has a high requirement on the data transmission delay, T₃ may be set to 0. If the communication system has a high requirement on the resource utilization, T₃ may be set to a positive number. If the jitter range of the data packet is large in the actual situation, T₃ may be set to a positive number, so that transmission of the data in the data packet can be completed within a packet delay budget PDB threshold. This avoids resource waste and energy consumption caused by retransmission of the data packet when transmission of data in the data packet is performed beyond the PDB threshold, and improves energy efficiency of data transmission.

In an optional implementation, when M is greater than or equal to 2, intervals between any two adjacent opportunity windows in the M opportunity windows may be different. Because jitter within the specific range exists between the actual arrival moment and the expected moment of the data, and jitter complies with a specific probability distribution in mathematical statistics, a value of an interval between two adjacent opportunity windows in opportunity windows configured by the network device may be small near a moment at which a data packet arrival probability is high in a plurality of moments in the jitter range. This can reduce a data transmission delay, and helps improve energy efficiency of data transmission. A value of an interval between two adjacent opportunity windows in the opportunity windows configured by the network device may be large near a moment at which a data packet arrival probability is low in the plurality of moments in the jitter range. This helps reduce resource waste.

In addition, an interval between any two adjacent opportunities in each opportunity window may be customized by a user, or may be determined through negotiation between the network device and the terminal device. Preferably, an interval between a first opportunity window and a second opportunity window in the M opportunity windows is half of the jitter range of the data. For example, M=4, an interval between a first opportunity window and a second opportunity window is an interval 1, an interval between the second opportunity window and a third opportunity window is an interval 2, and an interval between the third opportunity window and a fourth opportunity window is an interval 1. The interval 1, the interval 2, and the interval 3 may have different values.

In an optional implementation, the method may further include: The network device sends first information, where the first information indicates a length of the first time range. This implementation helps notify the terminal device of the length of the first time range, so that the terminal device can receive the data within the first time range. Correspondingly, the terminal device receives the first information. Optionally, the first information may be opportunity configuration information.

In an optional implementation, the method may further include: The network device sends second information, where the second information indicates the N opportunities. Correspondingly, the terminal device receives the second information, and determines the N opportunities based on the second information, so that the terminal device can receive the data within the N opportunities.

Optionally, the second information may be one piece of opportunity configuration information. When the opportunity configuration information is carried by SPS-Config of RRC signaling, the network device may add an information element (Information Element, IE) to SPS-Config, for example, SPS-Company, and the network device may set SPS-Company to true, to indicate that the network device determines the N opportunities. Alternatively, the network device may add a new SPS configuration, for example, SPS-Config-XR, to the RRC signaling. Parameter content in SPS-Config-XR is the same as parameter content in SPS-Config. When the opportunity configuration information is carried by SPS-Config-XR of the RRC signaling, the terminal device may learn that the network device determines the N opportunities. In addition, the network device may further add, to SPS-Config or SPS-Config-XR, an IE indicating a value of N. It can be learned that in this implementation, the N opportunities can be indicated by one piece of opportunity configuration information, and the terminal device can determine the N opportunities based on the piece of opportunity configuration information. This helps reduce power consumption of the terminal device.

Optionally, when M is greater than or equal to 2, the second information may include M pieces of opportunity configuration information. Each piece of opportunity configuration information may indicate an opportunity included in one of the M opportunity windows. Each piece of opportunity configuration information may be carried by different SPS-Config in the RRC signaling, and each piece of opportunity configuration information corresponds to a different SPS-ConfigIndex parameter in SPS-Config. In addition, the network device may further add, to SPS-Config corresponding to each piece of opportunity configuration information, a quantity of opportunities included in one of the M opportunity windows. It can be learned that, in this implementation, opportunities in each opportunity window are indicated by different opportunity configuration information. This helps avoid a case in which the terminal device cannot obtain information about all opportunities due to a transmission error in the second information.

S102: The network device sends the data within two or more of the N opportunities, and correspondingly, the terminal device receives the data within the two or more opportunities.

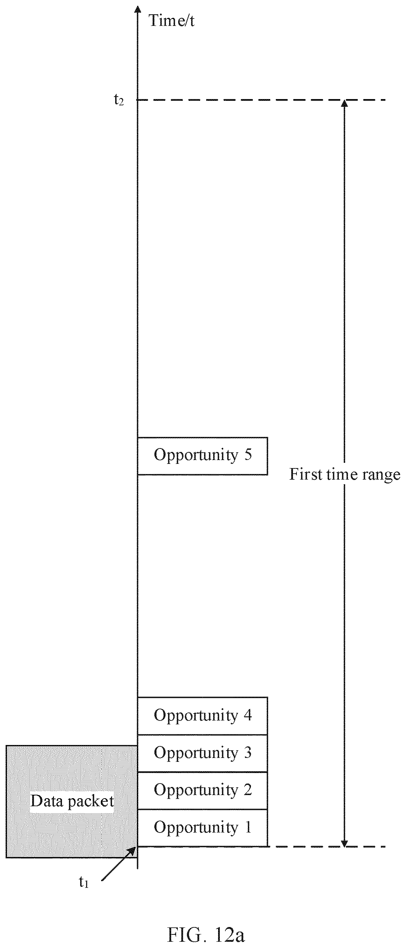

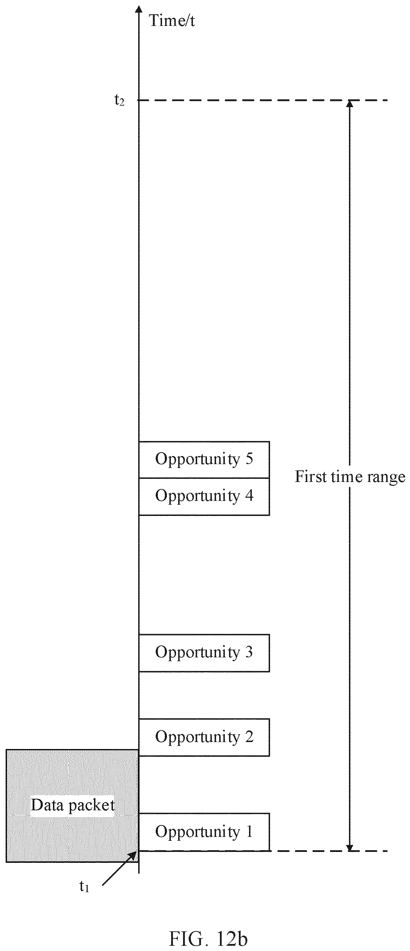

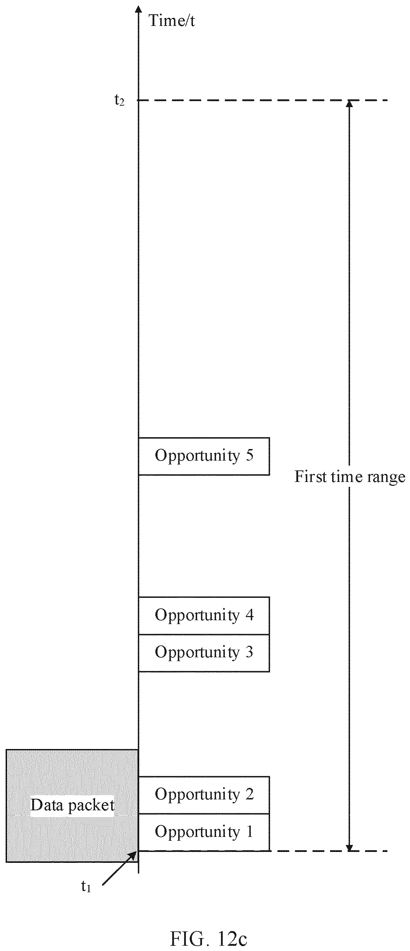

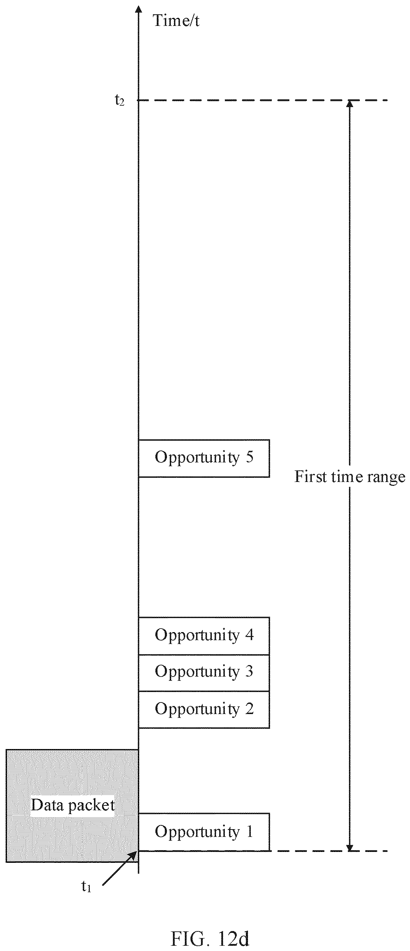

In an optional implementation, the two or more of the N opportunities for data transmission are opportunities in one or more of the M opportunity windows. This application provides the following several optional manners:
Manner 1: When M=1, the first time range includes one opportunity window, and the opportunity window includes the N opportunities. In this case, the two or more opportunities for data transmission are opportunities in the opportunity window.
Manner 2: M≥2, the two or more opportunities for data transmission are opportunities in one of the M opportunity windows, and the opportunity window includes two or more of the N opportunities. For example, as shown in FIG. 12a, M=2, N=5, there is a to-be-transmitted data packet at a moment t₁, and three opportunities need to be used for transmission. The five opportunities determined by the network device are an opportunity 1, an opportunity 2, an opportunity 3, an opportunity 4, and an opportunity 5, and the opportunity windows included in the first time range [t₁, t₂] are an opportunity window 1 and an opportunity window 2. The opportunity window 1 includes the opportunity 1, the opportunity 2, the opportunity 3, and the opportunity 4, and the opportunity window 2 includes the opportunity 5. It can be seen from FIG. 12a that opportunities for data transmission are the opportunity 1, the opportunity 2, and the opportunity 3 in the opportunity window 1.
Manner 3: M≥2, the two or more opportunities for data transmission are opportunities in a plurality of the M opportunity windows, and each of the plurality of opportunity windows includes one of the N opportunities. For example, as shown in FIG. 12b, M=4, N=5, there is a to-be-transmitted data packet before a moment t₁, and three opportunities need to be used for transmission. The five opportunities determined by the network device are an opportunity 1, an opportunity 2, an opportunity 3, an opportunity 4, and an opportunity 5, and the opportunity windows included in the first time range [t₁, t₂] are an opportunity window 1, an opportunity window 2, an opportunity window 3, and an opportunity window 4. The opportunity window 1 includes the opportunity 1, the opportunity window 2 includes the opportunity 2, the opportunity window 3 includes the opportunity 3, and the opportunity window 4 includes the opportunity 4 and the opportunity 5. It can be seen from FIG. 12b that opportunities for data transmission are the opportunity 1 in the opportunity window 1, the opportunity 2 in the opportunity window 2, and the opportunity 3 in the opportunity window 3.
Manner 4: M≥2, the two or more opportunities for data transmission are opportunities in a plurality of the M opportunity windows, and each of the plurality of opportunity windows includes two or more of the N opportunities. For example, as shown in FIG. 12c, M=3, N=5, there is a to-be-transmitted data packet before a moment t₁, and three opportunities need to be used for transmission. The five opportunities determined by the network device are an opportunity 1, an opportunity 2, an opportunity 3, an opportunity 4, and an opportunity 5, and the opportunity windows included in the first time range [t₁, t₂] are an opportunity window 1, an opportunity window 2, and an opportunity window 3. The opportunity window 1 includes the opportunity 1 and the opportunity 2, the opportunity window 2 includes the opportunity 3 and the opportunity 4, and the opportunity window 3 includes the opportunity 5. It can be seen from FIG. 12c that opportunities for data transmission are the opportunity 1 and the opportunity 2 in the opportunity window 1 and the opportunity 3 in the opportunity window 2.
Manner 5: M≥2, and the two or more opportunities for data transmission are opportunities in a plurality of opportunity windows of the M opportunity windows. In the plurality of opportunity windows, each of some opportunity windows includes one of the N opportunities, and each of opportunity windows other than the opportunity windows includes two or more of the N opportunities. For example, as shown in FIG. 12d, M=3, N=5, there is a to-be-transmitted data packet before a moment t₁, and three opportunities need to be used for transmission. The five opportunities determined by the network device are an opportunity 1, an opportunity 2, an opportunity 3, an opportunity 4, and an opportunity 5, and the opportunity windows included in the first time range [t₁, t₂] are an opportunity window 1, an opportunity window 2, and an opportunity window 3. The opportunity window 1 includes the opportunity 1, the opportunity window 2 includes the opportunity 2, the opportunity 3, and the opportunity 4, and the opportunity window 3 includes the opportunity 5. It can be seen from FIG. 12d that opportunities for data transmission are the opportunity 1 in the opportunity window 1 and the opportunity 2 and the opportunity 3 in the opportunity window 2.

In an optional implementation, the method may further include: When there is no to-be-transmitted data before a first time unit of a first opportunity in an opportunity window, the network device may deactivate the opportunity in the opportunity window, determine whether there is the to-be-transmitted data before a first time unit of a first opportunity in a next opportunity window, until there is the to-be-transmitted data before a first time unit of a first opportunity in an opportunity window, and send the data to the terminal device within the opportunity in the opportunity window. In other words, the network device may predetermine whether the data arrives before a first time unit of a first opportunity in an opportunity window, and if the data does not arrive, deactivate the opportunity in the opportunity window. This implementation helps reduce power consumption generated when the terminal device waits to receive the data within each opportunity window, and saves energy of the terminal device. In this application, a first opportunity in each opportunity window indicates a first opportunity in time domain in opportunities included in the opportunity window.

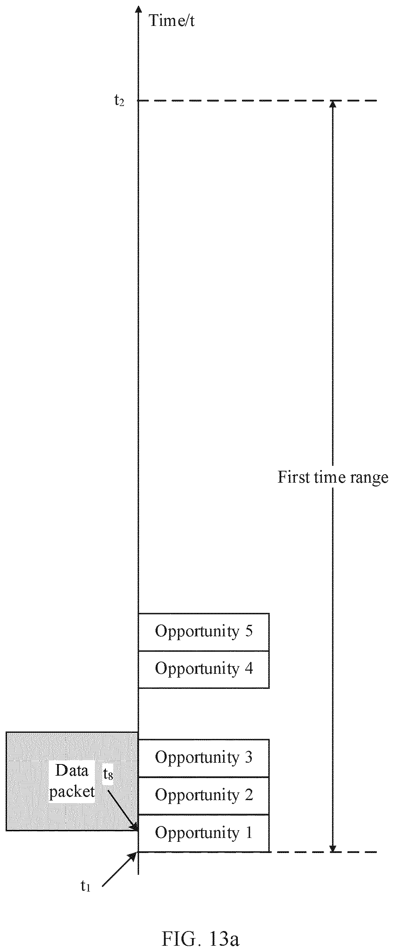

For example, with reference to FIG. 13a, the first time range [t₁, t₂] includes two opportunity windows. A first opportunity window includes an opportunity 1, an opportunity 2, and an opportunity 3, and a second opportunity window includes an opportunity 4 and an opportunity 5. The data packet arrives at the network device at a moment t₈. It can be seen from FIG. 13a that the network device may deactivate the opportunity 1, the opportunity 2, and the opportunity 3 if there is no to-be-transmitted data before a first time unit (namely, t₁) of the opportunity 1 in the first opportunity window. If the network device has the to-be-transmitted data before a first time unit of the opportunity 4 in the second opportunity window, the network device may send the data to the terminal device within the opportunity in the second opportunity window.

In another optional implementation, the method may further include: When there is no to-be-transmitted data before a last time unit of a j^{th} opportunity in an opportunity window, the network device may deactivate an opportunity other than first j opportunities in the opportunity window, determine whether there is the to-be-transmitted data before a last time unit of a j^{th} opportunity in a next opportunity window, until there is the to-be-transmitted data before a last time unit of a j^{th} opportunity in an opportunity window, and send the data to the terminal device within the opportunity in the opportunity window, where j is a positive integer. This implementation helps reduce power consumption caused by performing determining in each opportunity in an opportunity window by the network device, and saves energy of the network device. In this application, a j^{th} opportunity in each opportunity window indicates a j^{th} opportunity in time domain in opportunities included in the opportunity window.

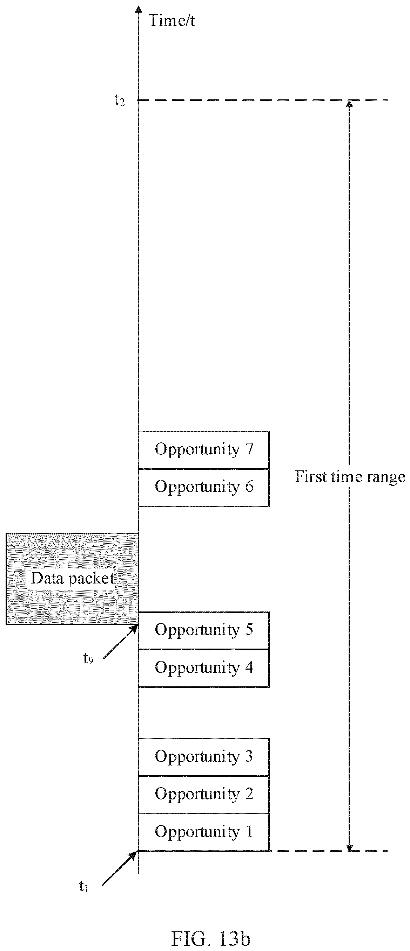

For example, with reference to FIG. 13b, the first time range [t₁, t₂] includes three opportunity windows. A first opportunity window includes an opportunity 1, an opportunity 2, and an opportunity 3, a second opportunity window includes an opportunity 4 and an opportunity 5, and a third opportunity window includes an opportunity 6 and an opportunity 7. There is the to-be-transmitted data from a moment t₉. If j is 1, it can be seen from FIG. 13b that there is no to-be-transmitted data before a last time unit of the opportunity 1 in the first opportunity window, and the opportunity 2 and the opportunity 3 are deactivated. If there is no to-be-transmitted data before a last time unit of the opportunity 4 in the second opportunity window, the opportunity 5 is deactivated. If there is the to-be-transmitted data before a last time unit of the opportunity 6 in the third opportunity window, the data is sent to the terminal device within an opportunity in the third opportunity window.

In still another optional implementation, the method may further include: When the terminal device does not receive, in first k consecutive opportunities in an opportunity window, data from the network device, the terminal device deactivates an opportunity other than the first k opportunities in the opportunity window, and determines whether the data is received in first k consecutive opportunities in a next opportunity window, until the data is received in first k consecutive opportunities in an opportunity window, where k is a positive integer. That the terminal device receives the data means that the terminal device correctly receives TB carried on a PDSCH. This implementation helps reduce power consumption caused by performing determining in each opportunity in an opportunity window by the terminal device, and saves energy of the terminal device. Optionally, a determining condition for the terminal device to deactivate the opportunity may be agreed upon by the network device and the terminal device in advance. In this application, first k consecutive opportunities in each opportunity window are first k consecutive opportunities in time domain in opportunities included in the opportunity window.

In this application, j and/or k may be customized by a user, or may be determined through negotiation between the network device and the terminal device. For example, j and/or k may be determined based on a miss detection probability acceptable by the communication system. If the miss detection probability acceptable by the communication system is high, j and/or k may be set to a small value, that is, a quantity of opportunities that need to be determined is small, so that the network device or the terminal device is more energy-saving. If the miss detection probability acceptable by the communication system is low, j and/or k may be set to a large value.

In addition, k may alternatively be configured by the network device for the terminal device, or may be determined by the terminal device based on power consumption, a current channel condition, or the like.

In an optional implementation, the method may further include: If there is an unused opportunity in the N opportunities within the first time range in addition to the two or more opportunities for data transmission, the network device may deactivate the unused opportunity. This implementation helps reduce resource waste of the opportunity after the opportunity for data transmission within the first time range. In addition, this implementation further helps reduce energy waste caused because the terminal device needs to continue to wait for data transmission within the first time range after retransmitted data transmission is performed within the first time range, and reduces power consumption of the terminal device. For example, with reference to FIG. 12d, the opportunity 1, the opportunity 2, and the opportunity 3 in the five opportunities are for data transmission, and the network device may deactivate the opportunity 4 and the opportunity 5.

In another optional implementation, the method may further include: If there is an unused opportunity in the N opportunities within the first time range in addition to the two or more opportunities for data transmission, the terminal device may deactivate the unused opportunity. This implementation helps reduce resource waste of the opportunity after the opportunity for data transmission within the first time range. In addition, this implementation further helps reduce energy waste caused because the terminal device needs to continue to wait for data transmission within the first time range after retransmitted data transmission is performed within the first time range, and reduces power consumption of the terminal device. Optionally, a determining condition for the terminal device to deactivate the opportunity may be agreed upon by the network device and the terminal device in advance.

In conclusion, in the communication method 100, the network device determines the N opportunities, where the N opportunities are within the first time range, N is a positive integer greater than or equal to 2, the first time range includes the M opportunity windows, the i^{th} opportunity window in the M opportunity windows includes the *Nᵢ* opportunities in the N opportunities, *Nᵢ* is a positive integer, M is a positive integer, and i=1, 2, ..., M. Then, the network device sends the data within the two or more of the N opportunities. Correspondingly, the terminal device receives the data within the two or more of the N opportunities. It can be learned that, compared with a manner in which data transmission is performed only within one opportunity, the communication method 100 in which the network device performs data transmission within the plurality of opportunities within the first time range helps perform transmission of a large data packet in a centralized manner within the first time range, and reduces a data transmission delay. In addition, when the data arrives earlier than the expected moment, the network device can perform data transmission within an opportunity in the front of the plurality of opportunities in time domain; or when the data arrives later than the expected moment, the network device can perform data transmission within an opportunity in the back of the plurality of opportunities in time domain. This resolves, on the basis of the feature of periodic arrival in the XR service, a data transmission delay problem caused by jitter within the specific range. The opportunity determined by the network device in the communication method may also be used for transmission of a small data packet (for example, transmission of a data packet performed within an opportunity) or a data packet without jitter.

### Embodiment 2: Communication method 200

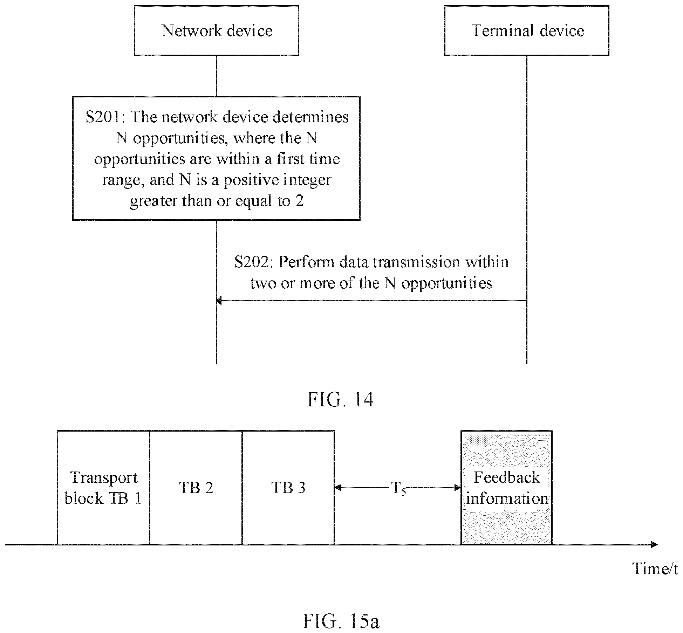

FIG. 14 is a schematic flowchart of the communication method 200 according to this embodiment of this application. The communication method 200 is described from a perspective of interaction between a network device and a terminal device. The communication method 200 includes the following steps.

S201: The network device determines N opportunities.

For related descriptions of step S201, refer to the related descriptions of step S101 in the communication method 100. Details are not described herein again. A difference from the communication method 100 lies in that the opportunity in the communication method 200 may be an opportunity for uplink transmission, for example, a CG opportunity. This is not limited herein. When the opportunity in the communication method 200 is the CG opportunity, a first time unit within a first opportunity in the N opportunities in time domain is a time unit used when a resource in the first opportunity is activated on a PDCCH.

Optionally, the N opportunities may include both an opportunity for downlink transmission and an opportunity for uplink transmission. A quantity of opportunities for uplink transmission needs to be greater than or equal to 2. Correspondingly, in the communication method 200, when sending data, the network device sends the data within two or more of the opportunities for uplink transmission.

S202: The terminal device sends the data within two or more of the N opportunities, and correspondingly, the network device receives the data within the two or more opportunities.

In an optional implementation, the two or more of the N opportunities for data transmission are opportunities in one or more of M opportunity windows. For specific descriptions, refer to the related descriptions in the communication method 100. Details are not described herein again.

In an optional implementation, the method may further include: When there is no to-be-transmitted data before a first time unit of a first opportunity in an opportunity window, the terminal device may deactivate the opportunity in the opportunity window, determine whether there is the to-be-transmitted data before a first time unit of a first opportunity in a next opportunity window, until there is the to-be-transmitted data before a first time unit of a first opportunity in an opportunity window, and send the data to the network device within the opportunity in the opportunity window. In other words, the terminal device may predetermine whether the data is obtained before a first time unit of a first opportunity in an opportunity window, and if the data is not obtained, deactivate the opportunity in the opportunity window. This implementation helps reduce resource waste, further helps reduce power consumption generated when the network device waits to receive the data in each opportunity window, and saves energy of the network device. Optionally, a determining condition for the terminal device to deactivate the opportunity may be agreed upon by the network device and the terminal device in advance.

In another optional implementation, the method may further include: When there is no to-be-transmitted data before a last time unit of a p^{th} opportunity in an opportunity window, the terminal device may deactivate an opportunity other than first p opportunities in the opportunity window, determine whether there is the to-be-transmitted data before a last time unit of a p^{th} opportunity in a next opportunity window, until there is the to-be-transmitted data before a last time unit of a p^{th} opportunity in an opportunity window, and send the data to the network device within the opportunity in the opportunity window, where p is a positive integer. Optionally, a determining condition for the terminal device to deactivate the opportunity may be agreed upon by the network device and the terminal device in advance.

In still another optional implementation, the method may further include: When the network device does not receive, in first q consecutive opportunities in an opportunity window, data from the terminal device, the network device deactivates an opportunity other than the first q opportunities in the opportunity window, and determines whether the data is received in first q consecutive opportunities in a next opportunity window, until the data is received in first k consecutive opportunities in an opportunity window, where q is a positive integer. That the network device receives the data means that the network device correctly receives TB carried on a PUSCH. This implementation helps reduce resource waste, further helps reduce power consumption caused by performing determining in each opportunity in an opportunity window by the network device, and saves energy of the network device.

In this application, p and/or q may be customized by a user, or may be determined through negotiation between the network device and the terminal device. For example, p and/or q may be determined based on a miss detection probability acceptable by a communication system. If the miss detection probability acceptable by the communication system is high, p and/or q may be set to a small value, that is, a quantity of opportunities that need to be determined is small, so that the network device or the terminal device is more energy-saving. If the miss detection probability acceptable by the communication system is low, p and/or q may be set to a large value.

In addition, q may alternatively be configured by the terminal device for the network device, or may be determined by the network device based on power consumption, a current channel condition, or the like.

In an optional implementation, the method may further include: If there is an unused opportunity in the N opportunities within the first time range in addition to the two or more opportunities for data transmission, the terminal device may deactivate the unused opportunity. This helps reduce resource waste. This implementation further helps reduce power consumption caused by performing determining in each opportunity in an opportunity window by the network device, and saves energy of the network device. Optionally, a determining condition for the terminal device to deactivate the opportunity may be agreed upon by the network device and the terminal device in advance.

In another optional implementation, the method may further include: If there is an unused opportunity in the N opportunities within the first time range in addition to the two or more opportunities for data transmission, the network device may deactivate the unused opportunity. This implementation helps reduce resource waste of the opportunity after the opportunity for data transmission within the first time range. In addition, this implementation further helps reduce energy waste caused because the terminal device needs to continue to wait for data transmission within the first time range after retransmitted data transmission is performed within the first time range, and reduces power consumption of the terminal device.

In conclusion, compared with a manner in which data transmission is performed only within one opportunity, the communication method 200 in which the terminal device can perform data transmission within the plurality of opportunities within the first time range helps perform transmission of a large data packet in a centralized manner within the first time range, and reduces a data transmission delay. In addition, when the data arrives earlier than an expected moment, the terminal device can perform data transmission within an opportunity in the front of the plurality of opportunities in time domain; or when the data arrives later than an expected moment, the terminal device can perform data transmission within an opportunity in the back of the plurality of opportunities in time domain. This resolves, on the basis of a feature of periodic arrival of an XR service, a data transmission delay problem caused by jitter within a specific range. In addition, the communication method further helps reduce power consumption of the network device and the terminal device. In addition, the opportunity determined by the network device in the communication method may also be used for transmission of a small data packet (for example, transmission of a data packet performed within an opportunity) or a data packet without jitter.

In the communication method 100, after receiving the transport block (transport block, TB) within the two or more opportunities within the first time range, the terminal device may further perform a HARQ feedback process. The HARQ feedback process may include: The terminal device determines whether data carried by a TB in each opportunity is correctly received, determines feedback information corresponding to the TB in each opportunity, and sends the feedback information corresponding to the TB in each opportunity to the network device. Similarly, in the communication method 200, after receiving the transport block TB within the two or more opportunities within the first time range, the network device may further perform a HARQ feedback process. The HARQ feedback process may include: The network device determines whether data carried by a TB in each opportunity is correctly received, determines feedback information corresponding to the TB in each opportunity, and sends the feedback information corresponding to the TB in each opportunity to the network device.

The HARQ feedback process is described below by using the communication method 100 as an example.

In an optional implementation, feedback information corresponding to two or more TBs transmitted within two or more opportunities is reported in the same HARQ process. In other words, the feedback information corresponding to the two or more TBs is reported by using one HARQ process number. This helps save a HARQ process number, has small feedback redundancy, and avoids a problem of an insufficient HARQ process number resource when HARQ round-trip time (round-trip time, RTT) is large.

In addition, an interval between a first time unit in which the feedback information corresponding to the two or more TBs is located and a last time unit of the two or more opportunities is T₅ time units. T₅ is a positive number, and T₅ is sufficient for the receiving device to determine the feedback information corresponding to the two or more TBs after the two or more TBs are received.

For example, as shown in FIG. 15a, the terminal device receives a TB 1 from the network device in an opportunity 1, receives a TB 2 in an opportunity 2, and receives a TB 3 in an opportunity 3. In addition, an interval between a start time unit in which feedback information corresponding to the TB 1, the TB 2, and the TB 3 is located and a last time unit of the opportunity 3 is T₅ time units.

Optionally, T₅ may be indicated by the network device in a PDCCH for activating a resource.

Optionally, the network device may separately allocate an independent HARQ ACK/NACK feedback bit to the two or more TBs corresponding to the HARQ process number. In this case, the network device may determine, based on information in each HARQ ACK/NACK feedback bit, whether data in a TB corresponding to the HARQ ACK/NACK feedback bit is correctly received by the terminal device. Therefore, the network device performs transmission of, during retransmission, data that is not correctly received by the terminal device. This helps avoid resource waste caused when data in some of the two or more TBs is not correctly received by the terminal device and transmission of all the data in the two or more TBs needs to be performed. In addition, when the terminal device indicates, in at least one of HARQ ACK/NACK feedback bits corresponding to the two or more TBs, that an error occurs in data transmission, the feedback information sent by the terminal device to the network device is NACK information.

Optionally, when a value of a HARQ ACK/NACK feedback bit is 1, it indicates that data in a TB corresponding to the HARQ ACK/NACK feedback bit is correctly received by the terminal device; or when a value of a HARQ ACK/NACK feedback bit is 0, it indicates that data in a TB corresponding to the HARQ ACK/NACK feedback bit is not correctly received by the terminal device, that is, an error occurs in data transmission in the TB.

For example, HARQ ACK/NACK feedback bits allocated by the network device to three TBs (including a TB 1, a TB 2, and a TB 3) corresponding to one HARQ process number include a bit 1 allocated to the TB 1, a bit 2 allocated to the TB 2, and a bit 3 allocated to the TB 3. If values of the bit 1 and the bit 3 are 1, it indicates that the terminal device correctly receives data in the TB 1 and the TB 2. If a value of the bit 2 is 0, it indicates that the terminal device does not correctly receive data in the TB 3, that is, an error occurs in data transmission in the TB 3. In this case, feedback information sent by the terminal device is NACK information.

In another optional implementation, the feedback information corresponding to the two or more TBs transmitted within the two or more opportunities is separately reported in different HARQ processes. In other words, the feedback information corresponding to the two or more TBs is reported by using different HARQ process numbers. In this manner, after receiving a TB within each opportunity, the terminal device may determine feedback information corresponding to the TB, and send the feedback information. The terminal device can send the feedback information before receiving both the two or more TBs, thereby reducing a feedback delay.

Optionally, the method further includes: The network device sends fifth information to the terminal device, where the fifth information indicates an interval between a first time unit in which feedback information corresponding to a TB in each of the two or more opportunities is located and a last time unit of the opportunity. Correspondingly, the terminal device receives the fifth information. The interval between the first time unit in which the feedback information corresponding to the TB in each opportunity is located and a last time unit of the opportunity may be the same or may be different. Optionally, the fifth information may be carried in higher layer signaling.

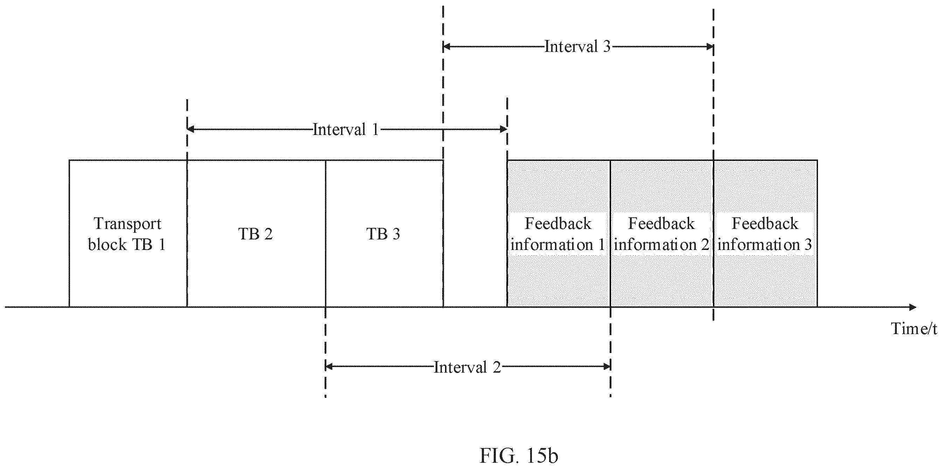

For example, as shown in FIG. 15b, the fifth information includes an interval 1, an interval 2, and an interval 3. The interval 1 is an interval between a last time unit of an opportunity for transmission of a TB 1 and a first time unit in which feedback information 1 corresponding to the TB 1 is located. The interval 2 is an interval between a last time unit of an opportunity for transmission of a TB 2 and a first time unit in which feedback information 2 corresponding to the TB 2 is located. The interval 3 is an interval between a last time unit of an opportunity for transmission of a TB 3 and a first time unit in which feedback information 3 corresponding to the TB 3 is located.

In the communication method 100, when the feedback information received by the network device from the terminal device is the NACK information, the network device may further perform a retransmission process. The retransmission process may include: The network device performs retransmitted data transmission within an opportunity in the first time range. Similarly, in the communication method 200, when the feedback information received by the terminal device from the network device is the NACK information, the terminal device may further perform a retransmission process. The retransmission process may include: The terminal device performs retransmitted data transmission within an opportunity in the first time range.

The retransmission process is described below by using the communication method 100 as an example.

In an optional embodiment, for the data that is not correctly received by the terminal device, the network device performs transmission of, within an opportunity in the one or more of the M opportunity windows, the retransmitted data corresponding to the data. In addition, an interval between an end location of a last time unit of the two or more opportunities for data transmission and a start location of a first time unit of the opportunity for retransmitted data transmission is T₄ time units. T₄ is a positive number, and T₄ is sufficient for the terminal device to determine the feedback information and perform transmission of the feedback information between the terminal device and the network device. In this implementation, when an error occurs in data transmission, the network device can perform retransmitted data transmission within the opportunity included in the first time range, thereby helping improve resource utilization.

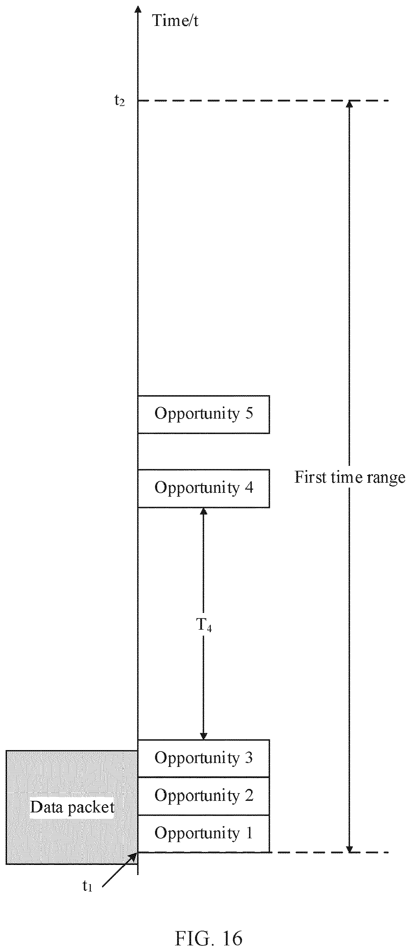

For example, as shown in FIG. 16, the five opportunities determined by the network device are an opportunity 1, an opportunity 2, an opportunity 3, an opportunity 4, and an opportunity 5, and the to-be-transmitted data packet includes data 1, data 2, and data 3. The network device sends the data 1 within an opportunity 1, sends the data 2 within the opportunity 2, and sends the data 3 within the opportunity 3. The terminal device does not correctly receive the data 1 within the opportunity 1, correctly receives the data 2 within the opportunity 2, and does not correctly receive the data 3 within the opportunity 3. In this case, the network device may send, within the opportunity 4, retransmitted data corresponding to the data 1, and send, within the opportunity 5, retransmitted data corresponding to the data 3. An interval between an end position of a last time unit of the opportunity 3 and a start position of a first time unit of the opportunity 4 is T₄ time units.

Optionally, when the feedback information corresponding to the two or more TBs in the HARQ feedback process is reported by using one HARQ process, the network device may further send, in the retransmission process, signaling indicating a TB corresponding to retransmitted data in the two or more TBs. Optionally, the signaling may be CBG-transmission (transmission information) signaling of a reused code block group (code block group, CBG).

Optionally, after retransmitted data transmission is performed within the opportunity in the one or more of the M opportunity windows, an opportunity after the opportunity for retransmitted data transmission in the first time range is deactivated. This implementation helps reduce resource waste of the opportunity after the opportunity for retransmitted data transmission within the first time range. In addition, this implementation further helps reduce energy waste caused because the network device needs to continue to wait for data transmission within the first time range after retransmitted data transmission is performed within the first time range, and reduces power consumption of the network device.

In another optional implementation, the network device performs retransmitted data transmission on a resource configured by using a dynamic mechanism.

It can be learned that when the error occurs in data transmission, the network device can perform the retransmission process and perform retransmitted data transmission in time. This helps reduce the data transmission delay caused because the terminal device does not correctly receive the data.

### Embodiment 3: Communication method 300

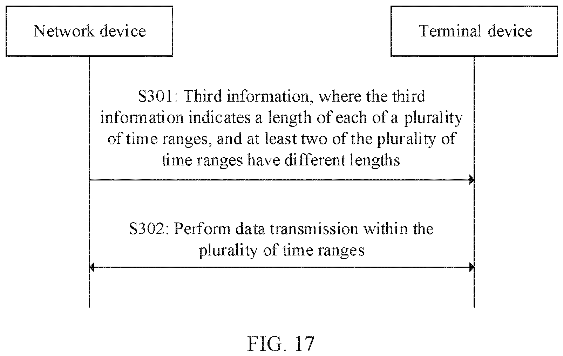

FIG. 17 is a schematic flowchart of the communication method 300 according to this embodiment of this application. The communication method 300 is described from a perspective of interaction between a network device and a terminal device. The communication method 300 includes the following steps.

S301: The network device sends third information, where the third information indicates a length of each of a plurality of time ranges, and at least two of the plurality of time ranges have different lengths; and correspondingly, the terminal device receives the third information.

In an optional implementation, before the network device sends third information, the method may further include: The network device determines the length of each of the plurality of time ranges.

Optionally, that the network device determines the plurality of time ranges may include: The network device determines a common multiple of periodicity of data and 1 ms; and determines, based on the data included in time corresponding to the common multiple, lengths of X time ranges included in the time corresponding to the common multiple. Then the network device determines the length of each of the plurality of time ranges based on the X time ranges. Specifically, for an n^{th} time range in the plurality of time ranges determined by the network device, if n%X is a positive integer, a length of the n^{th} time range is equal to a length of an (n%X)^{th} time range in the X time ranges; or if n%X is 0, a length of the n^{th} time range is equal to a length of an X^{th} time range in the X time ranges, where n%X is a remainder obtained by dividing n by X, and n is a positive integer, and X is a positive integer greater than or equal to 2.

The common multiple that is of the periodicity of the data and 1 ms and that is determined by the network device may be a least common multiple, or may be a positive integer multiple of a least common multiple.

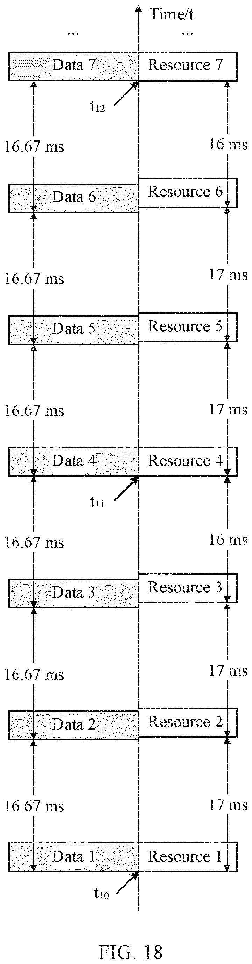

With reference to FIG. 18, an operation that the network device determines the plurality of time ranges is described below by using an example in which the common multiple that is of the periodicity of the data and 1 ms and that is determined by the network device is the least common multiple, the periodicity of the data is 16.67 ms, and both a start location of the data in time domain and a start location of a resource are a moment t₁₀ (that is, transmission of data 1 may be performed on a corresponding resource 1). A plurality of pieces of to-be-transmitted data sequentially one-to-one correspond to a plurality of configured resources in a sequence of the plurality of pieces of to-be-transmitted data in terms of time domain locations. To be specific, a g^{th} piece of data in the plurality of pieces of to-be-transmitted data corresponds to a g^{th} resource in the plurality of configured resources, where g is a positive integer.

The network device determines that the least common multiple of the periodicity of the data and 1 ms is 50 ms. It indicates that in time domain, transmission of data at an integer multiple of 50 ms (for example, a moment t₁₁, and a moment t₁₂ in FIG. 18) away from the moment t₁₀ may be performed on a corresponding resource. In FIG. 18, transmission of data 4 may be performed on a resource 4, and transmission of data 7 may be performed on a resource 7.

Then, the network device determines a length of each time range within time based on data within the time that is 50 ms away from the moment t₁₀, that is, determines a length of a time range within [t₁₀, t₁₁] based on the data within [t₁₀, tn]. It can be seen from FIG. 18 that, to enable transmission of data 2 to be performed on a corresponding resource 2, a start location of the resource 2 in the time domain needs to be after a start location of the data 2. In this case, a value 17 ms obtained by rounding up 16.67 ms is used as an interval between the start location of the resource 2 and a start location of the resource 1. In other words, a length of a first time range is 17 ms. Similarly, to enable transmission of data 3 to be performed on a corresponding resource 3, a start location of the resource 3 in the time domain needs to be after a start location of the data 3. In this case, a value 34 ms obtained by rounding up 34.34 ms (namely, twice the periodicity of the data) is used as an interval between the start location of the resource 3 and the start location of the resource 1. In other words, a length of a second time range is 17 ms. If an interval between a start location of a resource 4 and the start location of the resource 1 is the least common multiple 50 ms, a length of a third time range is 16 ms. In this case, the network device determines that lengths of three time ranges in [t₁₀, tn] are 17 ms, 17 ms, and 16 ms.

Then, the network device may determine the length of each of the plurality of time ranges based on the three time ranges within [t₁₀, tn]. For the n^{th} time range in the plurality of time ranges, if n%3 is a positive integer, a length of the n^{th} time range is equal to a length of an (n%3)^{th} time range in 3 time ranges; or if n%3 is 0, a length of the n^{th} time range is equal to a length of a third time range in the three time ranges.

In addition, for several common video frame rates in an XR video service, based on the foregoing manner of determining the time range, when a common multiple that is of periodicity of data and 1 ms and that is determined by the network devices is a least common multiple, a length of a time range included in time of the least common multiple is obtained at the video frame rates, as shown in Table 1.

**Table 1**

| Video frame rate (fps) | Least common multiple (ms) | Length (ms) of each time range included in time corresponding to the least common multiple |
|---|---|---|
| 30 | 100 | 34, 33, and 33 |
| 60 | 50 | 17, 17, and 16 |
| 90 | 100 | 12, 11, 11, 11, 11, 11, 11, 11, and 11 |
| 120 | 25 | 9, 8, and 8 |

In an optional implementation, a correspondence exists between the length of each time range in the plurality of time ranges and the data.

Optionally, a correspondence may exist between the length of each of the plurality of time ranges and the periodicity of the data.

Optionally, a length of an n^{th} time range in the plurality of time ranges satisfies the following formula: the length of the n^{th} time range=*fun*(*T* × *n*) - *fun*[*T* × (*n* - 1)], where T is the periodicity of the data, *fun* represents a rounding function, and n is a positive integer. Optionally, the rounding function may be a rounding-up function.

In an optional implementation, the third information is determined by the network device based on the foregoing formula, a channel state, signal quality, and the like. In this implementation, the determined length of each time range is more applicable to an actual communication environment. In another optional implementation, the third information is determined by the network device based on fourth information, a channel state, signal quality, and the like. The fourth information indicates a length of each time range preset by the terminal device. The length of each time range preset by the terminal device is determined by the terminal device based on the foregoing formula, a channel status, and signal quality. In this implementation, the length of each time range determined by the network device is more applicable to the actual communication environment and is applicable to data transmission between the network device and the specific terminal device, thereby further reducing a data transmission delay and reducing power consumption of the terminal device.

In addition, in this application, for how the third information indicates the length of each of the plurality of time ranges, this application provides the following several optional implementations:
Manner 1: The third information indicates the length of each of the plurality of time ranges in a form of a set or a sequence. A plurality of lengths in the set or the sequence may be one-to-one correspond to lengths of the plurality of time ranges in a sequence of arranging the plurality of lengths in the set or the sequence. In other words, a length of an n^{th} time range in the plurality of time ranges is equal to an n^{th} length in the plurality of lengths in the set or the sequence, where n is a positive integer. This implementation helps the terminal device directly learn of the length of each of the plurality of time ranges, without obtaining the length of each time range through calculation, helps reduce power consumption caused by calculation performed by the terminal device, and reduces energy consumption of the terminal device.

For example, for data whose video frame rate is 60 fps in the XR video service, the third information includes a set [17 ms, 17 ms, 16 ms, 17 ms, 17 ms, 16 ms, 17 ms, ...], and the set indicates the length of each of the plurality of time ranges. In this case, in the plurality of time ranges, a length of a first time range is 17 ms, a length of a second time range is 17 ms, a length of a third time range is 16 ms, and a length of a fourth time range is 17 ms. This is not enumerated herein.

In addition, for several common video frame rates in the XR video service, this application provides, at each video frame rate, a length of each of a plurality of time ranges indicated by third information, as shown in Table 2.

**Table 2**

| Video frame rate (fps) | Length (ms) of each of a plurality of time ranges |
|---|---|
| 30 | 34, 33, 33, 34, 33, 33, 34, 33, 33, ... |
| 60 | 17, 17, 16, 17, 17, 16, 17, 17, 16, ... |
| 90 | 12, 11, 11, 11, 11, 11, 11, 11, 11, 12, 11, 11, 11, 11, 11, 11, 11, 11, ... |
| 120 | 9, 8, 8, 9, 8, 8, 9, 8, 8, ... |

Manner 2: The third information includes respective lengths of X time ranges included in the time of the common multiple of the periodicity of the data and 1 ms. For the n^{th} time range in the plurality of time ranges, if n%X is a positive integer, a length of the n^{th} time range is equal to a length of an (n%X)^{th} time range in the X time ranges; or if n%X is 0, a length of the n^{th} time range is equal to a length of an X^{th} time range in the X time ranges, where n is a positive integer, and X is a positive integer greater than or equal to 2. This implementation helps reduce an information amount of the third information, and saves communication resources.

Optionally, the third information may indicate, in a form of a set or a sequence, the respective lengths of the X time ranges included in the time of the common multiple of the periodicity of the data and 1 ms.

Optionally, the common multiple of the periodicity of the data and 1 ms may be a least common multiple of the periodicity of the data and 1 ms, or may be an integer multiple of a least common multiple.

For example, for data whose video frame rate is 60 fps in the XR video service, the third information includes a set [17 ms, 17 ms, 16 ms], and the set indicates respective lengths of three time ranges included in time of the common multiple of the periodicity (1/60) ms of the data and 1 ms. In this case, in the plurality of time ranges, a length of a first time range is 17 ms, a length of a second time range is 17 ms, a length of a third time range is 16 ms, and a length of a fourth time range is 17 ms. This is not enumerated herein.

In addition, for several common video frame rates in the XR video service, this application provides, at each video frame rate, a length of each time range included in time, of a least common multiple of periodicity of data and 1 ms, included in third information, as shown in Table 3.

**Table 3**

| Video frame rate (fps) | Length (ms) of each time range included in time of a least common multiple of periodicity of data and 1 ms |
|---|---|
| 30 | 34, 33, and 33 |
| 60 | 17, 17, and 16 |
| 90 | 12, 11, 11, 11, 11, 11, 11, 11, and 11 |
| 120 | 9, 8, and 8 |

Manner 3: The length of each of the plurality of time ranges indicated by the third information includes at least a length of first periodicity and an offset corresponding to each of the plurality of time ranges. Manner 3 specifically includes the following several optional implementations (Manner 3.1 and Manner 3.2).

Manner 3.1: The third information includes the length of the first periodicity and a length offset corresponding to each of the plurality of time ranges. The length of each of the plurality of time ranges is a sum of the length of the first periodicity and a length offset corresponding to the time range.

Optionally, the length of the first periodicity may be a value obtained by rounding down the periodicity of the data.

Optionally, the third information may indicate the length offset corresponding to each of the plurality of time ranges in a form of a set or a sequence.

In Manner 3.1, for how the third information indicates the length offset corresponding to each of the plurality of time ranges, this application provides Manner 3.1.1 and Manner 3.1.2.

Manner 3.1.1: The third information includes the length of the first periodicity and the length offset corresponding to each of the plurality of time ranges. In other words, an n^{th} length offset in a plurality of length offsets indicated by the third information is a length offset corresponding to an n^{th} time range in the plurality of time ranges. A length of the n^{th} time range in the plurality of time ranges is a sum of the length of the first periodicity and the n^{th} length offset in the plurality of length offsets in the third information, where n is a positive integer. This implementation can help the terminal device directly learn of the length offset corresponding to each time range, without obtaining the length offset corresponding to each time range through calculation, help reduce power consumption caused by calculation performed by the terminal device, and reduce energy consumption of the terminal device.

For example, for data whose video frame rate is 60 fps in the XR video service, the third information includes a length of the first periodicity 16 ms and a set [1 ms, 1 ms, 0, 1 ms, 1 ms, 0, 1 ms, ...], and the set indicates a length offset corresponding to each of a plurality of time ranges. In this case, in the plurality of time ranges, a length of a first time range is 16 ms+1 ms=17 ms, a length of a second time range is 16 ms+1 ms=17 ms, a length of a third time range is 16 ms+0=16 ms, and a length of a fourth time range is 16 ms+1 ms=17 ms. This is not enumerated herein.

In addition, for several common video frame rates in the XR video service, this application provides, at each video frame rate, a length offset corresponding to each of a plurality of time ranges and a length of first periodicity that are indicated by third information, as shown in Table 4.

**Table 4**

| Video frame rate (fps) | Length (ms) of first periodicity | Length offset (ms) corresponding to each of a plurality of time ranges |
|---|---|---|
| 30 | 33 | 1, 0, 0, 1, 0, 0, 1, 0, 0, ... |
| 60 | 16 | 1, 1, 0, 1, 1, 0, 1, 1, 0, ... |
| 90 | 11 | 1, 0, 0, 0, 0, 0, 0, 0, 0, 1, 0, 0, 0, 0, 0, 0, 0, 0, ... |
| 120 | 8 | 1, 0, 0, 1, 0, 0, 1, 0, 0, ... |

Manner 3.1.2: The third information includes the length of the first periodicity and length offsets corresponding to the X time ranges included in the time of the common multiple of the periodicity of the data and 1 ms. For the n^{th} time range in the plurality of time ranges, if n%X is a positive integer, a length offset corresponding to the n^{th} time range is equal to a length offset corresponding to an (n%X)^{th} time range in the X time ranges, and therefore a length of the n^{th} time range is equal to a sum of the length of the first periodicity and the length offset corresponding to the (n%X)^{th} time range in the X time ranges; or if n%X is 0, a length offset corresponding to the n^{th} time range is equal to a length offset corresponding to an X^{th} time range in the X time ranges, and therefore a length of the n^{th} time range is equal to a sum of the length of the first periodicity and the length offset corresponding to the X^{th} time range in the X time ranges. This implementation helps reduce an information amount of the third information, and saves communication resources.

The common multiple of the periodicity of the data and 1 ms may be a least common multiple of the periodicity of the data and 1 ms, or may be a positive integer multiple of a least common multiple.

For example, for data whose video frame rate is 60 fps in the XR video service, the third information includes a length of first periodicity 16 ms and a set [1 ms, 1 ms, 0], and the set indicates respective length offsets of three time ranges included in time of a least common multiple of the periodicity of the data and 1 ms. In this case, in the plurality of time ranges, a length of a first time range is 16 ms+1 ms=17 ms, a length of a second time range is 16 ms+1 ms=17 ms, a length of a third time range is 16 ms+0=16 ms, and a length of a fourth time range is 16 ms+1 ms=17 ms. This is not enumerated herein.

In addition, for several common video frame rates in the XR video service, this application provides, at each video frame rate, a length offset corresponding to each time range included in time of a least common multiple of periodicity of data and 1 ms and a length of first periodicity that are included in third information, as shown in Table 5.

**Table 5**

| Video frame rate (fps) | Length (ms) of first periodicity | Length offset (ms) corresponding to each time range included in time of a least common multiple of periodicity of data and 1 ms |
|---|---|---|
| 30 | 33 | 1, 0, and 0 |
| 60 | 16 | 1, 1, and 0 |
| 90 | 11 | 1, 0, 0, 0, 0, 0, 0, 0, and 0 |
| 120 | 8 | 1, 0, and 0 |

Manner 3.2: The third information includes the length of the first periodicity and a location offset corresponding to each of the plurality of time ranges.

Optionally, the length of the first periodicity may be the common multiple of the periodicity of the data and 1 ms, that is, may be the least common multiple of the periodicity of the data and 1 ms, or may be an integer multiple of the least common multiple.

Optionally, the third information may indicate the location offset corresponding to each of the plurality of time ranges in a form of a set or a sequence.

In Manner 3.2, for how the third information indicates the location offset corresponding to each of the plurality of time ranges, this application provides Manner 3.2.1 and Manner 3.2.2.

Manner 3.2.1: The third information includes the length of the first periodicity and the location offset corresponding to each of the plurality of time ranges. The location offset corresponding to each of the plurality of time ranges may be an interval between a start location of a first time unit in each time range and a start location of a first time unit in a first time range in the plurality of time ranges. That is, a location offset corresponding to an n^{th} time range in the plurality of time ranges is an interval between a start location of a first time unit in the n^{th} time range and a start location of a first time unit in a first time range.

In addition, the length of each of the plurality of time ranges is an absolute value of a difference between a location offset corresponding to the time range and a location offset corresponding to a next time range. That is, a length of the n^{th} time range in the plurality of time ranges is an absolute value of a difference between the location offset corresponding to the n^{th} time range and a location offset corresponding to an (n+1)^{th} time range, where n is a positive integer. This implementation can help the terminal device directly learn of the location offset corresponding to each time range, without obtaining the location offset corresponding to each time range through calculation, help reduce power consumption caused by calculation performed by the terminal device, and reduce energy consumption of the terminal device.

Optionally, the third information in Manner 3.2.1 may further include only a location offset corresponding to each of the plurality of time ranges.

For example, for data whose video frame rate is 60 fps in the XR video service, the third information includes a length of first periodicity 50 ms (namely, a least common multiple of periodicity of data and 1 ms) and a set [0, 17 ms, 34 ms, 50 ms, 67 ms, 84 ms, 100 ms, ...], and the set indicates a location offset corresponding to each of a plurality of time ranges. In this case, in the plurality of time ranges, a length of a first time range is 10-171=17 ms, a length of a second time range is 117-341=17 ms, a length of a third time range is 134-501=16 ms, and a length of a fourth time range is 150-671=17 ms. This is not enumerated herein.

In addition, for several common video frame rates in the XR video service, this application provides, at each video frame rate, a location offset corresponding to each of a plurality of time ranges and a length of first periodicity that are indicated by third information, as shown in Table 6.

**Table 6**

| Video frame rate (fps) | Length (ms) of first periodicity | Location offset (ms) corresponding to each of a plurality of time ranges |
|---|---|---|
| 30 | 100 | 0, 34, 67, 100, 134, 167, 200, ... |
| 60 | 50 | 0, 17, 34, 50, 67, 84, 100, ... |
| 90 | 100 | 0, 12, 23, 34, 45, 56, 67, 78, 89, 100, 112, 123, 134, 145, ... |
| 120 | 25 | 0, 9, 17, 25, 34, 42, 50, ... |

Manner 3.2.2: The third information includes the length of the first periodicity and location offsets corresponding to X time ranges included in time of the length of the first periodicity. For the n^{th} time range in the plurality of time ranges, if n%X is a positive integer, a location offset corresponding to the n^{th} time range is equal to a sum of the length of the first periodicity*floor(n/X) and a location offset corresponding to an (n%X)^{th} time range in the X time ranges; or if n%X is 0, a location offset corresponding to the n^{th} time range is equal to a sum of the length of the first periodicity* floor(n/X) and a location offset corresponding to an X^{th} time range in the X time ranges, where floor indicates rounding down, n is a positive integer, and * indicates multiplication. That is, a length of the n^{th} time range is an absolute value of a difference between the location offset corresponding to the n^{th} time range and a location offset corresponding to an (n+1)^{th} time range. This implementation helps reduce an information amount of the third information, and saves communication resources.

The length of the first periodicity may be the least common multiple of the periodicity of the data and 1 ms, or may be a positive integer multiple of the least common multiple.

For example, for data whose video frame rate is 60 fps in the XR video service, the third information includes a length of first periodicity 50 ms (that is, a least common multiple of periodicity of data and 1 ms) and a set [0, 17 ms, 34 ms], and the set indicates location offsets corresponding to three time ranges included in time of the length of the first periodicity. In this case, in the plurality of time ranges, a location offset corresponding to a first time range is 0, a location offset corresponding to a second time range is 17 ms, a location offset corresponding to a third time range is 34 ms, a location offset corresponding to a fourth time range is 50 ms, and a location offset corresponding to a fifth time range is 67 ms. This is not enumerated herein. It can be learned that a length of the first time range is 17 ms, a length of the second time range is 17 ms, a length of the third time range is 16 ms, and a length of the fourth time range is 17 ms. This is not enumerated herein.

In addition, for several common video frame rates in the XR video service, this application provides, at each video frame rate, a location offset corresponding to each time range included in time of a length of first periodicity and the length of the first periodicity that are included in third information, as shown in Table 7.

**Table 7**

| Video frame rate (fps) | Length (ms) of first periodicity | Location offset (ms) corresponding to each time range included in time of the length of the first periodicity |
|---|---|---|
| 30 | 100 | 0, 34, and 67 |
| 60 | 50 | 0, 17, and 34 |
| 90 | 100 | 0, 12, 23, 34, 45, 56, 67, 78, and 89 |
| 120 | 25 | 0, 9, and 17 |

In the foregoing Manner 1, Manner 2, and Manner 3, the third information may be opportunity configuration information. In this case, a start location of a first time unit in a first time range in the plurality of time ranges is a moment at which a resource is activated by using a PDCCH.

Manner 4: The third information includes a plurality of pieces of sub-information, and each piece of sub-information may be opportunity configuration information corresponding to a resource specified by a different PDCCH, that is, each piece of sub-information corresponds to a different resource. Each piece of sub-information includes a length of first periodicity and a location offset corresponding to the sub-information. The length of the first periodicity is periodicity of the resource corresponding to the sub-information. The location offset corresponding to each piece of sub-information is an interval between a moment at which a resource corresponding to the sub-information is activated and a moment at which a resource corresponding to a first piece of sub-information in the plurality of pieces of sub-information is activated. The length of the first periodicity and the location offset corresponding to the sub-information that are included in each of the plurality of pieces of sub-information may be used to determine a length of each of the plurality of time ranges.

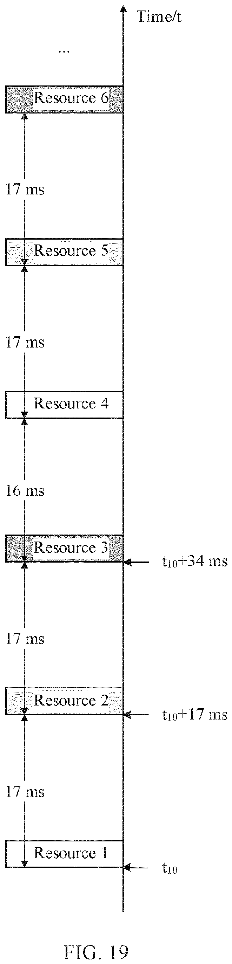

For example, for data whose video frame rate is 60 fps in the XR video service, the third information includes three pieces of sub-information. A first piece of sub-information includes a length of first periodicity 50 ms and a location offset 0. A second piece of sub-information includes a length of first periodicity 50 ms and a location offset 17 ms. A third piece of sub-information includes a length of first periodicity 50 ms and a location offset 34 ms. Distribution, in time domain, of a resource corresponding to each piece of sub-information may be determined based on the three pieces of sub-information, as shown in FIG. 19. In FIG. 19, periodicity of a resource corresponding to the first piece of sub-information is 50 ms, the resource is activated at a moment t₁₀, and the resource corresponding to the first piece of sub-information includes a resource 1, a resource 4, and the like. Periodicity of a resource corresponding to the second piece of sub-information is 50 ms, the resource is activated at a moment t₁₀+17 ms, and the resource corresponding to the second piece of sub-information includes a resource 2, a resource 5, and the like. Periodicity of a resource corresponding to the third piece of sub-information is 50 ms, the resource is activated at a moment t₁₀+34 ms, and the resource corresponding to the third piece of sub-information includes a resource 3, a resource 6, and the like. It can be learned that a length of each of a plurality of time ranges is an interval between first time units of two adjacent resources, that is, lengths of the plurality of time ranges are 17 ms, 17 ms, 16 ms, 17 ms, 17 ms, and the like.

In addition, for several common video frame rates in the XR video service, this application provides, at each video frame rate, a length of first periodicity and a location offset corresponding to the sub-information that are indicated by each piece of sub-information in the third information, as shown in Table 8.

**Table 8**

| Video frame rate (ms) | Sub-information included in third information | Length (ms) of first periodicity | Location offset (ms) |
|---|---|---|---|
| 30 | First piece of sub-information | 100 | 0 |
| | Second piece of sub-information | 100 | 34 |
| | Third piece of sub-information | 100 | 67 |
| 60 | First piece of sub-information | 50 | 0 |
| | Second piece of sub-information | 50 | 17 |
| | Third piece of sub-information | 50 | 34 |
| 90 | First piece of sub-information | 100 | 0 |
| | Second piece of sub-information | 100 | 12 |
| | Third piece of sub-information | 100 | 23 |
| | Fourth piece of sub-information | 100 | 34 |
| | Fifth piece of sub-information | 100 | 45 |
| | Sixth piece of sub-information | 100 | 56 |
| | Seventh piece of sub-information | 100 | 67 |
| | Eighth piece of sub-information | 100 | 78 |
| | Ninth piece of sub-information | 100 | 89 |
| 120 | First piece of sub-information | 25 | 0 |
| | Second piece of sub-information | 25 | 9 |
| | Third piece of sub-information | 25 | 17 |

S302: The network device and the terminal device perform data transmission within the plurality of time ranges.

For downlink transmission, the network device sends data to the terminal device within the plurality of time ranges; and correspondingly, the terminal device receives the data from the network device. For uplink transmission, the terminal device sends data to the network device within the plurality of time ranges; and correspondingly, the network device receives the data from the terminal device.

In addition, the first time range in the communication method 100 and the communication method 200 may be any one of the plurality of time ranges determined in the communication method 300. In other words, the N opportunities determined by the network device may be within an one of the plurality of time ranes. In addition, the network device may determine the N opportunities within each of the plurality of time ranges, and the network device and the terminal device may perform data transmission within the opportunities within each time range.

In conclusion, in the communication method 300, the network device determines the plurality of time ranges, and the at least two of the plurality of time ranges have the different lengths. Then, the network device and the terminal device can perform data transmission within the plurality of time ranges. The communication method helps enable the plurality of time ranges to match the periodicity in which the data in the XR service is in a decimal form, so that transmission of data in each periodicity can be performed on a resource in a time range that matches the periodicity. This reduces a data transmission delay and resource waste caused by mismatch between periodicity of a resource and the periodicity of the data in the XR service, that is, reduces a communication delay. It can be learned that the communication method helps transmission of the data in a data packet performed within a PDB threshold, avoids a case in which the data packet needs to be discarded when transmission of data in the data packet is performed beyond the PDB threshold, that is, further reduces a communication packet loss rate, increases a probability of data transmission in the plurality of time ranges, and reduces power consumption of the terminal.

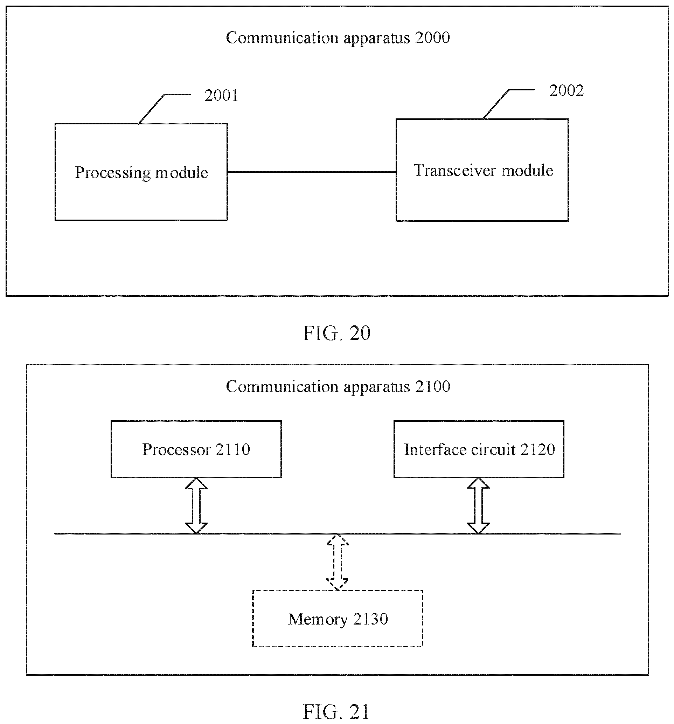

FIG. 20 and FIG. 21 each are a schematic diagram of a possible structure of a communication apparatus according to an embodiment of this application. The communication apparatuses may implement the functions of the terminal device or the network device in the foregoing method embodiments. Therefore, beneficial effect of the foregoing method embodiments can also be implemented. In embodiments of this application, the communication apparatus may be the network device in the communication system shown in FIG. 1a, FIG. 1b, or FIG. 1c, or may be the terminal device in the communication system, or may be a module (for example, a chip) applied to the terminal device or the network device.

As shown in FIG. 20, the communication apparatus 2000 includes a processing module 2001 and a transceiver module 2002. The communication apparatus 2000 may be configured to implement the functions of the network device or the terminal device in the method embodiment shown in FIG. 5, FIG. 14, or FIG. 17.

When the communication apparatus 2000 is configured to implement the function of the network device in the method embodiment in FIG. 5, the processing module 2001 is configured to determine N opportunities, where the N opportunities are within a first time range, N is a positive integer greater than or equal to 2, the first time range includes M opportunity windows, an i^{th} opportunity window in the M opportunity windows includes Ni opportunities in the N opportunities, Ni is a positive integer, M is a positive integer, and i=1, 2, ..., M; and the transceiver module 2002 is configured to send data within two or more of the N opportunities.

In an optional implementation, the transceiver module 2002 is further configured to send first information, where the first information indicates a length of the first time range.

In an optional implementation, M<N, the M opportunity windows include X opportunity windows, each of the X opportunity windows includes two or more of the N opportunities, and X is a positive integer less than or equal to M.

In an optional implementation, when X is equal to 1, an interval between any two adjacent opportunities in the X opportunity windows is T₁ time units, and T₁ is 0 or a positive number; or when X is greater than or equal to 2, an interval between any two adj acent opportunities in each of the X opportunity windows is T₂ time units, and T₂ is 0 or a positive number.

In an optional implementation, when M is greater than or equal to 2, an interval between any two adjacent opportunity windows in the M opportunity windows is T₃ time units, and T₃ is 0 or a positive number.

In an optional implementation, the transceiver module 2002 is further configured to send second information, where the second information indicates the N opportunities.

In an optional implementation, the two or more of the N opportunities for data transmission are opportunities in one or more of the M opportunity windows.

In an optional implementation, the transceiver module 2002 is further configured to perform retransmitted data transmission on opportunities in the one or more of the M opportunity windows, where an interval between an end location of a last time unit of an opportunity for data transmission and a start location of a first time unit of an opportunity for retransmitted data transmission is T₄ time units, and T₄ is a positive number.

When the communication apparatus 2000 is configured to implement the function of the terminal device in the method embodiment in FIG. 5, the processing module 2001 is configured to determine N opportunities, where the N opportunities are within a first time range, N is a positive integer greater than or equal to 2, the first time range includes M opportunity windows, an i^{th} opportunity window in the M opportunity windows includes Ni opportunities in the N opportunities, Ni is a positive integer, M is a positive integer, and i=1, 2, ..., M; and the transceiver module 2002 is configured to perform data transmission within two or more of the N opportunities.

In an optional implementation, the transceiver module 2002 is further configured to receive first information, where the first information indicates a length of the first time range.

In an optional implementation, M<N, the M opportunity windows include X opportunity windows, each of the X opportunity windows includes two or more of the N opportunities, and X is a positive integer less than or equal to M.

In an optional implementation, when X is equal to 1, an interval between any two adjacent opportunities in the X opportunity windows is T₁ time units, and T₁ is 0 or a positive number; or when X is greater than or equal to 2, an interval between any two adj acent opportunities in each of the X opportunity windows is T₂ time units, and T₂ is 0 or a positive number.

In an optional implementation, when M is greater than or equal to 2, an interval between any two adjacent opportunity windows in the M opportunity windows is T₃ time units, and T₃ is 0 or a positive number.

In an optional implementation, the transceiver module 2002 is further configured to receive second information, where the second information indicates the N opportunities. When determining the N opportunities, the processing module 2001 is specifically configured to determine the N opportunities based on the second information.

In an optional implementation, the two or more of the N opportunities for data transmission are opportunities in one or more of the M opportunity windows.

In an optional implementation, the transceiver module 2002 is further configured to perform retransmitted data transmission on opportunities in the one or more of the M opportunity windows, where an interval between an end location of a last time unit of an opportunity for data transmission and a start location of a first time unit of an opportunity for retransmitted data transmission is T₄ time units, and T₄ is a positive number.

When the communication apparatus 2000 is configured to implement the function of the network device in the method embodiment in FIG. 14, the processing module 2001 is configured to determine N opportunities, where the N opportunities are within a first time range, N is a positive integer greater than or equal to 2, the first time range includes M opportunity windows, an i^{th} opportunity window in the M opportunity windows includes Ni opportunities in the N opportunities, Ni is a positive integer, M is a positive integer, and i=1, 2, ..., M; and the transceiver module 2002 is configured to receive data within two or more of the N opportunities.

When the communication apparatus 2000 is configured to implement the function of the terminal device in the method embodiment in FIG. 14, the processing module 2001 is configured to determine N opportunities, where the N opportunities are within a first time range, N is a positive integer greater than or equal to 2, the first time range includes M opportunity windows, an i^{th} opportunity window in the M opportunity windows includes Ni opportunities in the N opportunities, Ni is a positive integer, M is a positive integer, and i=1, 2, ..., M; and the transceiver module 2002 is configured to send data within two or more of the N opportunities.

When the communication apparatus 2000 is configured to implement the function of the network device in the method embodiment in FIG. 17, the transceiver module 2002 is configured to send third information, where the third information indicates a length of each of a plurality of time ranges, and at least two of the plurality of time ranges have different lengths; and the transceiver module 2002 is configured to perform data transmission within the plurality of time ranges.

In an optional implementation, a correspondence exists between the length of each time range and data.

In an optional implementation, a length of an n^{th} time range in the plurality of time ranges satisfies the following formula: the length of the n^{th} time range= *fun*(*T* × *n*) - *fun*[*T* × (*n* - 1)], where T is the periodicity of the data, fun represents a rounding function, and n is a positive integer.

In an optional implementation, the length of each of the plurality of time ranges includes at least a length of first periodicity and an offset corresponding to each of the plurality of time ranges.

When the communication apparatus 2000 is configured to implement the function of the terminal device in the method embodiment in FIG. 17, the transceiver module 2002 is configured to receive third information, where the third information indicates a length of each of a plurality of time ranges, and at least two of the plurality of time ranges have different lengths; and the transceiver module 2002 is further configured to perform data transmission within the plurality of time ranges.

In an optional implementation, a correspondence exists between the length of each time range and data.

In an optional implementation, a length of an n^{th} time range in the plurality of time ranges satisfies the following formula: the length of the n^{th} time range= *fun*(*T* × n) - *fun*[*T* × (*n* - 1)], where T is periodicity of the data, fun represents a rounding function, and n is a positive integer.

In an optional implementation, the length of each of the plurality of time ranges includes at least a length of first periodicity and an offset corresponding to each of the plurality of time ranges.

For more detailed descriptions of the processing module 2001 and the transceiver module 2002, refer to related descriptions in the foregoing method embodiments. Details are not described herein again.

As shown in FIG. 21, the communication apparatus 2100 includes a processor 2110 and an interface circuit 2120. The processor 2110 and the interface circuit 2120 are coupled to each other. It may be understood that the interface circuit 2120 may be a transceiver or an input/output interface. Optionally, the communication apparatus 2100 may further include a memory 2130, configured to: store instructions executed by the processor 2110, or store input data required by the processor 2110 to run the instructions, or store data generated after the processor 2110 runs the instructions.

When the communication apparatus 2100 is configured to implement the method in the foregoing method embodiments, the processor 2110 may be configured to perform a function of the processing module 2001, and the interface circuit 2120 may be configured to perform a function of the transceiver module 2002.

When the communication apparatus is a chip used in a terminal device, the chip in the terminal device implements a function of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a chip used in a network device, the chip in the network device implements the function of the network device in the foregoing method embodiments. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or any regular processor, or the like.

The method steps in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in an access network device or a terminal device. Certainly, the processor and the storage medium may exist in the access network device or the terminal device as discrete components.

All or some of the foregoing embodiments may be implemented by using software, hardware, firmware, or any combination thereof. When software is used to implement embodiments, all or a part of the embodiments may be implemented in a form of a computer program product. The computer program product includes one or more computer programs and instructions. When the computer programs or instructions are loaded and executed on a computer, all or some of the processes or functions in embodiments of this application are executed. The computer may be a general-purpose computer, a dedicated computer, a computer network, or other programmable apparatuses. The computer programs or the instructions may be stored in a computer-readable storage medium, or may be transmitted through the computer-readable storage medium. The computer-readable storage medium may be any usable medium accessible by a computer, or a data storage device like a server integrating one or more usable media. The usable medium may be a magnetic medium, for example, a floppy disk, a hard disk, or a magnetic tape; may be an optical medium, for example, a DVD; or may be a semiconductor medium, for example, a solid-state drive (solid state disk, SSD).

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, at least one means one or more, and a plurality of means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. A communication method, performed by a terminal device or a module in a terminal device, wherein the method comprises:
determining N opportunities, wherein the N opportunities are within a first time range, and N is a positive integer greater than or equal to 2; and
the first time range comprises M opportunity windows, an ith opportunity window in the M opportunity windows comprises Ni opportunities in the N opportunities, Ni is a positive integer, M is a positive integer, and i=1, 2, ..., M; and
performing data transmission within two or more of the N opportunities.

2. The method according to claim 1, wherein the method further comprises:
receiving first information, wherein the first information indicates a length of the first time range.

3. The method according to claim 1 or 2, wherein
M<N, the M opportunity windows comprise X opportunity windows, each of the X opportunity windows comprises the two or more of the N opportunities, and X is a positive integer less than or equal to M.

4. The method according to claim 3, wherein
when X is equal to 1, an interval between any two adjacent opportunities in the X opportunity windows is T1 time units, and T1 is 0 or a positive number; or
when X is greater than or equal to 2, an interval between any two adjacent opportunities in each of the X opportunity windows is T2 time units, and T2 is 0 or a positive number.

5. The method according to any one of claims 1 to 4, wherein
when M is greater than or equal to 2, an interval between any two adjacent opportunity windows in the M opportunity windows is T3 time units, and T3 is 0 or a positive number.

6. The method according to any one of claims 1 to 5, wherein the method further comprises:
receiving second information, wherein the second information indicates the N opportunities; and
the determining N opportunities comprises:
determining the N opportunities based on the second information.

7. The method according to any one of claims 1 to 6, wherein the two or more of the N opportunities for data transmission are opportunities in one or more of the M opportunity windows.

8. The method according to claim 7, wherein the method further comprises:
performing retransmitted data transmission within opportunities in the one or more of the M opportunity windows, wherein an interval between an end location of a last time unit of an opportunity for data transmission and a start location of a first time unit of an opportunity for retransmitted data transmission is T4 time units, and T4 is a positive number.

9. A communication method, performed by a network device or a module in a network device, wherein the method comprises:
determining N opportunities, wherein the N opportunities are within a first time range, and N is a positive integer greater than or equal to 2; and
the first time range comprises M opportunity windows, an ith opportunity window in the M opportunity windows comprises Ni opportunities in the N opportunities, Ni is a positive integer, M is a positive integer, and i=1, 2, ..., M; and
performing data transmission within two or more of the N opportunities.

10. The method according to claim 9, wherein the method further comprises:
sending first information, wherein the first information indicates a length of the first time range.

11. The method according to claim 9 or 10, wherein
M<N, the M opportunity windows comprise X opportunity windows, each of the X opportunity windows comprises the two or more of the N opportunities, and X is a positive integer less than or equal to M.

12. The method according to claim 11, wherein
when X is equal to 1, an interval between any two adjacent opportunities in the X opportunity windows is T1 time units, and T1 is 0 or a positive number; or
when X is greater than or equal to 2, an interval between any two adjacent opportunities in each of the X opportunity windows is T2 time units, and T2 is 0 or a positive number.

13. The method according to any one of claims 9 to 12, wherein
when M is greater than or equal to 2, an interval between any two adjacent opportunity windows in the M opportunity windows is T3 time units, and T3 is 0 or a positive number.

14. The method according to any one of claims 9 to 13, wherein the method further comprises:
sending second information, wherein the second information indicates the N opportunities; and
the determining N opportunities comprises:
determining the N opportunities based on the second information.

15. The method according to any one of claims 9 to 14, wherein the two or more of the N opportunities for data transmission are opportunities in one or more of the M opportunity windows.

16. The method according to claim 15, wherein the method further comprises:
performing retransmitted data transmission within opportunities in the one or more of the M opportunity windows, wherein an interval between an end location of a last time unit of an opportunity for data transmission and a start location of a first time unit of an opportunity for retransmitted data transmission is T4 time units, and T4 is a positive number.

17. A communication method, performed by a terminal device or a module in a terminal device, wherein the method comprises:
receiving third information, wherein the third information indicates a length of each of a plurality of time ranges, and at least two of the plurality of time ranges have different lengths; and
performing data transmission within the plurality of time ranges.

18. The method according to claim 17, wherein
a correspondence exists between the length of each time range and data.

19. The method according to claim 18, wherein a length of an nth time range in the plurality of time ranges satisfies the following formula:
the length of the nth time range= *fun*(*T* × *n*) - *fun*[*T* × (*n* - 1)], wherein
T is periodicity of the data, fun represents a rounding function, and n is a positive integer.

20. The method according to claim 17, wherein
the length of each of the plurality of time ranges comprises at least a length of first periodicity and an offset corresponding to each of the plurality of time ranges.

21. A communication method, performed by a network device or a module in a network device, wherein the method comprises:
sending third information, wherein the third information indicates a length of each of a plurality of time ranges, and at least two of the plurality of time ranges have different lengths; and
performing data transmission within the plurality of time ranges.

22. The method according to claim 21, wherein a correspondence exists between the length of each time range and data.

23. The method according to claim 22, wherein a length of an nth time range in the plurality of time ranges satisfies the following formula:
the length of the nth time range=*fun*(*T* × *n*) - *fun[T* × (*n* - 1)], wherein
T is periodicity of the data, fun represents a rounding function, and n is a positive integer.

24. The method according to claim 22, wherein
the length of each of the plurality of time ranges comprises at least a length of first periodicity and an offset corresponding to each of the plurality of time ranges.

25. A communication apparatus, wherein the apparatus comprises:
a processing module, configured to determine N opportunities, wherein the N opportunities are within a first time range, and N is a positive integer greater than or equal to 2; and
the first time range comprises M opportunity windows, an ith opportunity window in the M opportunity windows comprises Ni opportunities in the N opportunities, Ni is a positive integer, M is a positive integer, and i=1, 2, ..., M; and
a transceiver module, configured to perform data transmission within two or more of the N opportunities.

26. The apparatus according to claim 25, wherein
the transceiver module is further configured to receive first information, wherein the first information indicates a length of the first time range.

27. The apparatus according to claim 25 or 26, wherein
M<N, the M opportunity windows comprise X opportunity windows, each of the X opportunity windows comprises two or more of the N opportunities, and X is a positive integer less than or equal to M.

28. The apparatus according to claim 27, wherein
when X is equal to 1, an interval between any two adjacent opportunities in the X opportunity windows is T1 time units, and T1 is 0 or a positive number; or
when X is greater than or equal to 2, an interval between any two adjacent opportunities in each of the X opportunity windows is T2 time units, and T2 is 0 or a positive number.

29. The apparatus according to any one of claims 25 to 28, wherein
when M is greater than or equal to 2, an interval between any two adjacent opportunity windows in the M opportunity windows is T3 time units, and T3 is 0 or a positive number.

30. The apparatus according to any one of claims 25 to 29, wherein
the transceiver module is further configured to receive second information, wherein the second information indicates the N opportunities; and
when determining the N opportunities, the processing module is specifically configured to determine the N opportunities based on the second information.

31. The apparatus according to any one of claims 25 to 30, wherein the two or more of the N opportunities for data transmission are opportunities in one or more of the M opportunity windows.

32. The apparatus according to claim 31, wherein
the transceiver module is further configured to perform retransmitted data transmission within opportunities in the one or more of the M opportunity windows, wherein an interval between an end location of a last time unit of an opportunity for data transmission and a start location of a first time unit of an opportunity for retransmitted data transmission is T4 time units, and T4 is a positive number.

33. A communication apparatus, wherein the apparatus comprises:
a processing module, configured to determine N opportunities, wherein the N opportunities are within a first time range, and N is a positive integer greater than or equal to 2; and
the first time range comprises M opportunity windows, an ith opportunity window in the M opportunity windows comprises Ni opportunities in the N opportunities, Ni is a positive integer, M is a positive integer, and i=1, 2, ..., M; and
a transceiver module, configured to perform data transmission within two or more of the N opportunities.

34. The apparatus according to claim 33, wherein
the transceiver module is further configured to send first information, wherein the first information indicates a length of the first time range.

35. The apparatus according to claim 33 or 34, wherein
M<N, the M opportunity windows comprise X opportunity windows, each of the X opportunity windows comprises two or more of the N opportunities, and X is a positive integer less than or equal to M.

36. The apparatus according to claim 35, wherein
when X is equal to 1, an interval between any two adjacent opportunities in the X opportunity windows is T1 time units, and T1 is 0 or a positive number; or
when X is greater than or equal to 2, an interval between any two adjacent opportunities in each of the X opportunity windows is T2 time units, and T2 is 0 or a positive number.

37. The apparatus according to any one of claims 33 to 36, wherein
when M is greater than or equal to 2, an interval between any two adjacent opportunity windows in the M opportunity windows is T3 time units, and T3 is 0 or a positive number.

38. The apparatus according to any one of claims 33 to 37, wherein
the transceiver module is further configured to send second information, wherein the second information indicates the N opportunities; and
when determining the N opportunities, the processing module is specifically configured to determine the N opportunities based on the second information.

39. The apparatus according to any one of claims 33 to 38, wherein the two or more of the N opportunities for data transmission are opportunities in one or more of the M opportunity windows.

40. The apparatus according to claim 39, wherein
the transceiver module is further configured to perform retransmitted data transmission within opportunities in the one or more of the M opportunity windows, wherein an interval between an end location of a last time unit of an opportunity for data transmission and a start location of a first time unit of an opportunity for retransmitted data transmission is T4 time units, and T4 is a positive number.

41. A communication apparatus, wherein the apparatus comprises:
a transceiver module, configured to receive third information, wherein the third information indicates a length of each of a plurality of time ranges, and at least two of the plurality of time ranges have different lengths; and
the transceiver module is further configured to perform data transmission within the plurality of time ranges.

42. The apparatus according to claim 41, wherein
a correspondence exists between the length of each time range and data.

43. The apparatus according to claim 42, wherein a length of an nth time range in the plurality of time ranges satisfies the following formula:
the length of the nth time range= *fun(T* × *n)* - *fun[T* × (*n* - 1)], wherein
T is periodicity the data, fun represents a rounding function, and n is a positive integer.

44. The apparatus according to claim 41, wherein
the length of each of the plurality of time ranges comprises at least a length of first periodicity and an offset corresponding to each of the plurality of time ranges.

45. A communication apparatus, wherein the apparatus comprises:
a transceiver module, configured to send third information, wherein the third information indicates a length of each of a plurality of time ranges, and at least two of the plurality of time ranges have different lengths; and
the transceiver module is further configured to perform data transmission within the plurality of time ranges.

46. The apparatus according to claim 45, wherein a correspondence exists between the length of each time range and data.

47. The apparatus according to claim 46, wherein a length of an nth time range in the plurality of time ranges satisfies the following formula:
the length of the nth time range=*fun*(*T* × *n*) - *fun*[*T* × (*n* - 1)], wherein
T is periodicity of the data, fun represents a rounding function, and n is a positive integer.

48. The apparatus according to claim 46, wherein
the length of each of the plurality of time ranges comprises at least a length of the first periodicity and an offset corresponding to each of the plurality of time ranges.

49. A communication apparatus, comprising a processor and a communication interface, wherein the communication interface is configured to: receive a signal from a communication apparatus other than the communication apparatus and transmit the signal to the processor, or send a signal from the processor to a communication apparatus other than the communication apparatus; and the processor is configured to implement, by using a logic circuit or executing code instructions, the method according to any one of claims 1 to 8, 9 to 16, 17 to 20, or 21 to 24.

50. A computer-readable storage medium, wherein the computer-readable storage medium stores a computer program, and when the computer program is run, the method according to any one of claims 1 to 8, 9 to 16, 17 to 20, or 21 to 24 is implemented.

51. A computer program product, wherein the computer program product comprises computer program code, and when the computer program code is run, the method according to any one of claims 1 to 8, 9 to 16, 17 to 20, or 21 to 24 is implemented.
